(19) Europäisches Patentamt
European Patent Office
Office européen des brevets

(11) **EP 2 605 920 B1**

(12) **EUROPÄISCHE PATENTSCHRIFT**

(45) Veröffentlichungstag und Bekanntmachung des Hinweises auf die Patenterteilung:
**18.02.2015   Patentblatt 2015/08**

(21) Anmeldenummer: **11735388.8**

(22) Anmeldetag: **20.07.2011**

(51) Int Cl.:
*B60B 3/10* *(2006.01)*       *B60B 7/00* *(2006.01)*
*B60B 7/06* *(2006.01)*       *B60B 19/10* *(2006.01)*
*F16D 65/78* *(2006.01)*      *F16D 65/847* *(2006.01)*

(86) Internationale Anmeldenummer:
**PCT/EP2011/003625**

(87) Internationale Veröffentlichungsnummer:
**WO 2012/022410 (23.02.2012 Gazette 2012/08)**

(54) **FAHRZEUGRAD**

VEHICLE WHEEL

ROUE DE VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.04.2011   DE 102011016534**
**16.08.2010   DE 102010034418**

(43) Veröffentlichungstag der Anmeldung:
**26.06.2013   Patentblatt 2013/26**

(73) Patentinhaber: **Audi AG**
**85045 Ingolstadt (DE)**

(72) Erfinder:
• **SCHMID, Wolfgang**
**85354 Freising (DE)**
• **BERINGER, Heinrich**
**85095 Denkendorf (DE)**
• **KOSSIRA, Christoph**
**85053 Ingolstadt (DE)**
• **MEITINGER, Karl-Heinz**
**81667 München (DE)**

(74) Vertreter: **Engelhardt, Harald**
**AUDI AG**
**Patentabteilung**
**85045 Ingolstadt (DE)**

(56) Entgegenhaltungen:
**EP-A2- 0 145 487     EP-A2- 1 319 526**
**FR-A1- 2 699 453**

**Beschreibung**

Die Erfindung betrifft ein Fahrzeugrad umfassend eine Felge, einen an dieser befestigten Bremstopf und eine am Bremstopf befestigte Bremsscheibe, wobei an der Felge mehrere schwenkbar gelagerte plattenförmige Abdeckelemente zum temporären Verschließen zugeordneter felgenseitiger Durchbrechungen vorgesehen sind, die über wenigstens ein thermisch gesteuertes Stellelement von einer Schließstellung, die die Abdeckelemente bei Drehung des Rades fliehkraftbedingt einnehmen, in eine Offenstellung bringbar sind, wobei jedes Abdeckelement längs der Schwenkachse gegen die Kraft eines Rückstellelements verschiebbar und mit der Felge über ein bei einer Verschiebebewegung zwangsführendes Koppelelement verbunden ist.

Die Konzeption moderner Felgen unterliegt unterschiedlichen, einander teilweise entgegenlaufenden Anforderungen. Neben einer eine einfache Herstellung ermöglichenden einfachen Felgenkontur ist eine zentrale Forderung, dass die Felge eine möglichst hohe Luftdurchströmung ermöglicht, um im Bedarfsfall die Bremsscheibe optimal über den Luftstrom kühlen zu können. Ferner muss beim Nachheizen der Bremsscheibe im Stand dafür gesorgt werden, dass die Wärme auch ohne Luftströmung abtransportiert werden kann. Das heißt, dass hieraus die Forderung nach einer möglichst "offenen" Felgenstruktur resultiert.

Aus aerodynamischen Gründen jedoch sollte die Felge möglichst geschlossen sein, um Luftverwirbelungen, die durch die Felgendurchbrüche entstehen, möglichst zu verhindern. Im normalen Fahrbetrieb herrscht im Bereich des Unterbodens des Fahrzeugs ein Überdruck, der dafür sorgt, dass Luft durch die Freiräume der Felge gedrückt wird. Würde die Felge als geschlossene Scheibe ausgeführt, so könnte der Cw-Wert, der als Faktor in die Berechnung des Luftwiderstands des Fahrzeugs eingeht, verbessert werden.

Um diesen einerseits aus thermischen, andererseits aus aerodynamischen Gründen einander quasi widersprechenden Anforderungen gerecht zu werden, ist es bekannt, durch Verwendung beweglicher, üblicherweise schwenkbar gelagerter plattenförmiger Abdeckelemente die felgenseitigen Durchbrechungen bedarfsabhängig öffnen und schließen zu können. Bei solchen Systemen sind die plattenförmigen Abdeckelemente zumeist schwenkgelagert und längs der Schwenkachse radial beweglich. Zur Felge hin sind die Abdeckelemente zusätzlich über jeweils ein zwangsführendes Koppelelement verbunden. Mit zunehmender Raddrehzahl nimmt die auf die Abdeckelemente wirkende Fliehkraft immer stärker zu, was dazu führt, dass sie, ausgehend von einer radial innenliegenden Stellung, in der sie die jeweils zugeordnete Durchbrechung öffnen, radial nach außen wandern, wobei während dieser fliehkraftbedingten Radialbewegung infolge der Zwangsführung über das Koppelelement die Abdeckelemente von der Offenstellung in die Schließstellung schwenken. Diese radiale Bewegung erfolgt gegen die Kraft eines Rückstellelements, üblicherweise einer Feder, die das jeweilige Abdeckelement wieder radial nach innen drängt, jedoch aufgrund der hohen Fliehkräfte überdrückt wird. Nimmt die Raddrehzahl wieder ab, ist die Bewegung umgekehrt, die Abdeckelemente öffnen infolge der radial nach innen erfolgenden Bewegung durch das Rückstellelement mit abnehmender Fliehkraft über das zwangsführende Koppelelement automatisch, wenn sie in ihre innenliegende Stellung übergehen.

Um dann, wenn trotz höherer Fahrgeschwindigkeit und radial nach außen bewegten, also geschlossenen Abdeckelementen die Temperatur im Radinneren, also im Bereich der Bremse, hinreichend hoch ist, so dass eine Kühlung unbedingt erforderlich ist, diese über einen Luftstrom durch die Felge zu ermöglichen, ist bei dem beispielsweise aus EP 0 145 487 A2 bekannten Mechanismus ein temperaturgesteuertes Stellelement beispielsweise in Form einer Formgedächtnislegierung oder eines thermischen Bimetalls vorgesehen, das sich bei Erreichen einer hinreichend hohen Stelltemperatur verformt und verformungsbedingt eine Kraft auf das zugeordnete Abdeckelement aufbringt, um dieses von der radial außenliegenden Stellung zurück in die radial innenliegende Offenstellung zu drücken. Hierbei ist jedoch die hohe Flieh- oder Zentripetalkraft zu überdrücken, um das Abdeckelement über das zwangsführende Koppelelement wieder zurückzudrücken. Dies setzt hohe Anforderungen an das jeweilige thermisch gesteuerte Stellelement, die folglich das entsprechende Arbeitsvermögen aufweisen müssen.

Grundsätzlich ergeben sich aus den eingangs erwähnten Anforderungen an ein "aktives" Fahrzeugrad mehrere unterscheidbare Zustände. Im Fahrzeugstillstand sind die plattenförmigen Abdeckelemente geöffnet. Dadurch wird zum einen ein häufig aus Gründen des Designs gewünschter 3D-Effekt (Tiefeneffekt) erzeugt, zum anderen kann, wenn die Bremsscheibe aufgrund einer vorherigen Fahrt nachheizt, die Abwärme durch die Felge abgeleitet werden. Ab einer bestimmten Fahrzeuggeschwindigkeit, z. B. 30 - 40 km/h, ist das Design des Rades für das menschliche Auge nicht mehr zu differenzieren, man sieht lediglich noch eine rotierende Scheibe. Ab dieser Grenzgeschwindigkeit sollten die Abdeckelemente schließen, um die Aerodynamik zu verbessern. Wird hingegen die Betriebsbremse während der Fahrt betätigt, und wärmt sich die Bremsscheibe auf, sind die Abdeckelemente wieder zu öffnen, um die Belüftung der Bremsanlage zu gewährleisten. Es ergeben sich also folgende Zustandsänderungen bezüglich des Abdeckelements:

Abdeckelement geöffnet → Abdeckelement geschlossen, wenn:

$$v > v_{grenz} \text{ und } T < T_{grenz}$$

Abdeckelement geschlossen → Abdeckelement geöffnet, wenn:

$$v < v_{grenz} \text{ oder } T > T_{grenz}$$

Dabei bedeutet v die Istgeschwindigkeit, $v_{grenz}$ die zuvor beschriebene Grenzgeschwindigkeit, T die Isttemperatur im Bereich der Fahrzeugbremse, sowie $T_{grenz}$ eine Grenztemperatur, ab welcher die Abdeckelemente zu öffnen sind.

Aus EP 1 319 526 A2, das die Merkmale des Oberbegriffs der Ansprüche 1 und 2 zeigt, ist ferner ein Fahrzeugrad bekannt, umfassend eine Felge mit Felgenbett zur Aufnahme eines Reifens oder zur Ausbildung einer Lauffläche, sowie mit mehreren zwischen dem Nabenabschnitt der Felge und dem Felgenbett über deren Umfang verteilt angeordneten Tragelementen wie Speichen oder Stegen, zwischen denen Durchbrüche oder Zwischenräume vorgesehen sind. Wenigstens einer dieser Durchbrüche oder Zwischenräume ist zumindest teilweise abdeck- oder verschließbar, während sich das mit diesem Fahrzeugrad oder dieser Felge ausgerüstete Fahrzeug bewegt, oder der Durchbruch oder Zwischenraum ist freilegbar, wenn sie das Rad oder die Felge bewegt. Zum Verschließen ist ein entsprechendes Abdeckelement vorgesehen, das mittels eines Aktuators in die jeweils gewünschte Position bewegt werden kann.

Ferner ist aus FR 2 699 453 A1 ein Fahrzeugrad bekannt, bei dem ebenfalls felgenseitig Öffnungen vorgesehen sind, die über Verschlusselemente, die bei Drehung des Rades fliegkraftbedingt beweglich sind, geöffnet respektive geschlossen werden können, sodass im geöffneten Zustand Luft hindurchströmen kann.

Wie eingangs beschrieben sind mit dem passiven, thermisch gesteuerten Stellelement beachtliche Kräfte zu erzeugen, um aktiv den Flügel zu öffnen, wenn eine hohe Flieh- oder Zentripetalkraft wirkt. Der Erfindung liegt deshalb das Problem zugrunde, ein Fahrzeugrad anzugeben, das es ermöglicht, die plattenförmigen Abdeckelemente trotz wirkender Flieh- oder Zentripetalkräfte durch Aufbringen einer begrenzten Kraft öffnen zu können.

Zur Lösung dieses Problems ist bei einem Fahrzeugrad der eingangs genannten Art erfindungsgemäß vorgesehen, dass das Koppelelement eine integrierte Elastizität aufweist oder gegen eine solche Elastizität felgenseitig und/oder abdeckelementseitig gelagert ist, derart, dass die zum Bewegen eines Abdeckelements aus der Schließstellung in die Offenstellung benötigte Kraft begrenzt ist.

Bei dem erfindungsgemäßen Fahrzeugrad kommt mit besonderem Vorteil kein "starres" Koppelelement zum Einsatz, sondern ein Koppelelement mit einer integrierten Elastizität respektive ein Koppelelement, das gegen eine solche Elastizität felgen- und/oder abdeckelementseitig gelagert ist. Das Koppelelement übt seine zwangsführende Bewegungskopplung auch beim erfindungsgemäßen Fahrzeugrad derart aus, dass es mit zunehmender Raddrehzahl und einer radial folgenden Bewegung der Abdeckelemente nach außen diese zwangsführend um die Schwenkachse in die Schließstellung verschwenkt. Soll nun beispielsweise bei hinreichend hoher Drehzahl der Flügel geöffnet werden, beispielsweise weil die Grenztemperatur überschritten ist, so drückt wie bisher das thermisch gesteuerte Stellelement auf das Abdeckelement. Das Abdeckelement ist jedoch nicht mehr starr über oder gegen das Koppelelement gelagert, sondern über die integrierte Elastizität respektive die felgen- oder abdeckelementseitig vorgesehene Elastizität zu einem gewissen Grad elastisch respektive beweglich gelagert. Die aufzubringende Kraft muss infolgedessen lediglich die integrierte Elastizität "überdrücken", um das jeweilige Abdeckelement aus der geschlossenen Stellung in eine aufgeschwenkte offene Stellung zu bewegen. Die Flieh- oder Zentripetalkraft ist nicht mehr zu überdrücken, sie spielt hier keine bzw. eine vernachlässigbare Rolle. Denn das oder die Stellelemente (die Abdeckelemente können, wenn sie untereinander bewegungsgekoppelt sind, über ein gemeinsames Stellelement simultan bewegt werden, denkbar ist aber auch, jedes Abdeckelement über ein eigenes zugeordnetes Stellelement zu betätigen) sind lediglich noch so auszulegen bzw. müssen nur noch ein solches Arbeitsvermögen aufweisen, dass sie in der Lage sind, die koppelelementseitige Elastizität zu überdrücken und das Abdeckelement zu verschwenken. Während dieser Schwenkbewegung kommt es zu keiner Zwangsführung, das heißt, das jeweilige Abdeckelement bleibt in seiner rotationsbedingt eingenommenen radial außenliegenden Position, es wird lediglich aus der an der Felge anliegenden Position in die Offenstellung bewegt.

Die Integration der Elastizität oder die Lagerung des Koppelelements gegen eine solche ermöglicht folglich mit besonderem Vorteil, die Kraft, die zum Bewegen des Abdeckelements aus der rotationsbedingt eingenommenen Schließstellung in die Offenstellung benötigt wird, auf ein Maß zu begrenzen, das ohne weiteres von einem thermisch gesteuerten Stellelement, also einem passiven Stellelement geleistet werden kann. Denn infolge der Anordnung dieser Elastizität werden die Abdeckelemente bezüglich dieser einfachen Schwenkbewegung quasi von der Flieh- oder Zentripetalkraft "entkoppelt", da lediglich diese zusätzliche Elastizität zu überdrücken ist. Das Fahrzeugrad respektive jedes Abdeckelement weist erfindungsgemäß also zwei Elastizitäten auf, nämlich zum einen die Elastizität des Rückstellelements, gegen das jedes Abdeckelement längs der Schwenkachse rotationsbedingt bewegt wird, also beispielsweise eine dort vorgesehene Schraubenfeder, die das Abdeckelement stets entgegen der Flieh- oder Zentripetalkraft wieder radial nach innen bewegt, zum anderen die zusätzlich vorgesehene koppelelementseitige Elastizität, die zum Entkoppeln der Abdeckelementbewegung von der Flieh- oder Zentripetalkraft dient.

Bei bekannten Fahrzeugrädern mit den eingangs beschriebenen, beweglichen und zwangsgeführten Abdeckelementen besteht jedoch nicht nur das Problem, sie, thermisch bedingt, während der Fahrt zur Bremsenbelüftung zu öffnen, also von der Schließstellung in die Offenstellung zu bringen. Denn aufgrund der Starrheit oder Steifigkeit der Zwangsführung über das Koppelelement besteht auch ein Problem beispielsweise beim Heranfahren an eine Bordsteinkante während eines Einparkvorgangs oder im Falle von Vandalismus. In beiden Fällen befindet sich das Abdeckelement in der ausgeschwenkten, geöffneten Stellung, es liegt also in der felgeninneren Ausgangsstellung. Fährt nun das Fahrzeug an den Bordsteinrand, so kann es dazu kommen, dass sich zunächst das Abdeckelement mit seinem ausgeschwenkten, seitlich von der Felgenebene abstehenden Abschnitt an den Bordstein anlegt. Bei Fortsetzung der Fahrzeugbewegung kann es nun dazu kommen, dass, nachdem lokal auf einen äußerst nah an der Schwenkachse befindlichen Punkt am Abdeckelement gedrückt wird, mithin also ein kurzer Hebel gegeben ist, sehr hohe Kräfte auf die Abdeckelementlagerung wirken, da das Abdeckelement infolge der Starrheit oder Steifigkeit der Zwangsführung dem applizierten Druck nicht folgt. Im Extremfall kann es zu einer Beschädigung des Abdeckelements kommen. Auch im Vandalismusfall, wenn von außen kräftig auf den vorstehenden Abschnitt des Abdeckelements gedrückt wird, kann es zu einer Beschädigung kommen.

Der Erfindung liegt deshalb des Weiteren das Problem zugrunde, ein Fahrzeugrad anzugeben, das es ermöglicht, die plattenförmigen Abdeckelemente auch bei vernachlässigbaren Flieh- oder Zentripetalkräften durch Aufbringen einer begrenzten Kraft schließen zu können.

Zur Lösung dieses Problems ist bei einem Fahrzeugrad der eingangs genannten Art erfindungsgemäß vorgesehen, dass das Koppelelement eine integrierte Elastizität aufweist oder gegen eine solche felgenseitig und/oder abdeckelementseitig gelagert ist, derart, dass die zum Bewegen eines Abdeckelements aus der Offenstellung in die Schließstellung benötigte Kraft begrenzt ist.

Auch bei dieser erfindungsgemäßen Lösung kommt mit besonderem Vorteil kein "starres" Koppelelement zum Einsatz, sondern ein Koppelelement mit einer integrierten Elastizität respektive ein Koppelelement, das gegen eine solche Elastizität felgen- oder abdeckelementseitig gelagert ist. Das Koppelelement ist selbstverständlich in der Lage, seine Zwangsführung bei hinreichend hoher Raddrehzahl zum automatischen Schließen, also seine originäre Funktion, auszuführen. Infolge der erfindungsgemäßen Integration der Elastizität oder der Lagerung des Koppelelements gegen eine solche ist es jedoch möglich, die benötigte Kraft zum Bewegen aus der Offenstellung, die das jeweilige Abdeckelement im Stand oder bei langsamer Fahrt einnimmt, in die Schließstellung zu begrenzen. Die aufzubringende Kraft muss folglich lediglich die integrierte Elastizität "überdrücken", um das jeweilige Abdeckelement aus der aufgeschwenkten offenen Stellung in die geschlossene Stellung zu bewegen. Die Steifigkeit oder Starrheit der Zwangsführung respektive der Bewegungskopplung ist nicht mehr der die aufzubringende Kraft limitierende Faktor, sondern die Steifigkeit der integrierten Elastizität. Das Abdeckelement ist folglich auch hier quasi "entkoppelt", was das Bewegen aus der Offen- in die Schließstellung im Stand respektive bei langsamer Fahrt, also ohne Einwirken nennenswerter Flieh- oder Zentripetalkräfte, angeht.

Im beschriebenen Beispielsfall eines Einparkvorgangs bedeutet dies, dass bei Annäherung an den die Bordsteinkante und Anlegen eines Abdeckelements an diese mit Fortsetzung der Fahrzeugbewegung das Abdeckelement mit geringem Kraftaufwand einschwenkt, also in die Schließstellung übergeht und sich folglich in die Felgenebene einpasst, ohne dass hierbei hohe Kräfte wirken. Denn der von der Bordsteinkante ausgeübte Druck muss nicht groß sein, um diese Einschwenkbewegung zu erwirken, da lediglich die integrierte Elastizität zu Überdrücken ist. Auch im Falle eines manuellen Drückens gegen den vorstehenden Abdeckelementabschnitt schwenkt das Abdeckelement bei relativ geringem Kraftaufwand ein, was zur Vermeidung einer Beschädigung von Vorteil ist.

Das erfindungsgemäße Fahrzeugrad kann mit besonderem Vorteil die beschriebene Entkopplung über die Elastizität aber auch in beiden Richtungen aufweisen, das heißt, dass über eine integrierte oder eine lagerseitig vorgesehene Elastizität eine Kraftbegrenzung beim Übergang von der Schließstellung in die Offenstellung gegeben ist, um die eingangs beschriebene, thermisch bedingte Öffnung bei schneller Fahrt zu ermöglichen. Zusätzlich kann über eine, gegebenenfalls weitere, integrierte oder lagerungsseitig vorgesehene Elastizität ein kraftbegrenzter Übergang von der Offenstellung in die Schließstellung realisiert sein, um im Stand oder bei langsamer Fahrt ein einfaches, kraftbegrenztes Einschwenken in die Schließstellung zu ermöglichen.

Die Realisierung beider kraftbegrenzten Bewegungen kann durch Integration zweier separater Elastizitäten oder durch Lagerung des Koppelelements gegen zwei separate Elastizitäten realisiert sein. Jede Elastizität ist in einer Bewegungsrichtung des Abdeckelements wirksam. Zweckmäßig ist es jedoch, wenn, wie erfindungsgemäß vorgesehen ist, nur eine Elastizität vorgesehen ist, die doppelt wirkend ist, derart, dass sie sowohl die zum Bewegen des Abdeckelements aus der Schließstellung in die Offenstellung benötigte Kraft als auch die zum Bewegen des Abdeckelements aus der Offenstellung in die Schließstellung benötigte Kraft begrenzt. Die vorgesehene Elastizität wirkt also in zwei Richtungen, kann also kompakt aufgebaut und entweder im Koppelelement integriert respektive lagerungsseitig eingesetzt werden. Die Elastizität ist in diesem Fall also nicht zweifach vorzusehen respektive, was die Bewegungskopplung angeht, lokal getrennt zu realisieren, sondern kann durchaus als kompakte Einheit aufgebaut werden.

Grundsätzlich kann eine Elastizität, auch eine gemeinsame Elastizität, nicht nur mittels eines elastische Eigenschaften aufweisenden Bauteils realisiert werden, sondern auch mittels zweier Bauteile, wie beispielsweise zweier Federelemente z. B. in Form zweier Schraubenfedern, die beispielsweise eine koppelelementseitig integrierte Elastizität bilden, jedoch in unterschiedliche Richtungen arbeiten und zusammen eine gemeinsame integrierte Elastizität bilden. Entsprechendes gilt auch beispielsweise für zwei Bauteile jeweils in Form eines elastischen Kunststoffpuffers. Auch diese beiden Kunststoffpuffer können gemeinsam eine Elastizität bilden, auch wenn sie gegebenenfalls in unterschiedliche Richtungen arbeiten.

Diese zusätzliche Elastizität kann entweder mittels eines Federelements gebildet sein, denkbar ist aber auch die Integration eines aus einem elastischen Material bestehenden Elements wie beispielsweise eines elastischen Kunststoffpuffers, beispielsweise eines Gummipuffers oder Ähnlichem. Verwendet werden kann ein beliebiges Bauteil, solange es die erfindungsgemäße Entkopplung ermöglicht.

Das Koppelelement selbst kann nach einer ersten Erfindungsausgestaltung eine Koppelstange sein. Diese Koppelstange ist mit einem Ende beweglich an der Felge fixiert, beispielsweise über ein Kugelgelenk, das eine Schwenk- und Kippbewegung zulässt. Mit dem anderen Ende ist sie an dem Abdeckelement in gleicher Weise z. b. über ein Kugelgelenk beweglich angeordnet, wobei dort lediglich eine Schwenklagerung vorgesehen ist. Bewegt sich nun das Abdeckelement radial nach außen, so kommt es, da während dieser Bewegung die Koppelstange ihre Länge nicht ändert, zu einer Linearbewegung verbunden mit einer Schwenkbewegung um die Abdeckelement-Schwenkachse, resultierend aus der Fixierung der insoweit starren Koppelstange an der Felge und am Abdeckelement.

Die Koppelstange selbst besteht zweckmäßigerweise aus zwei Abschnitten, die über die Elastizität zueinander axial verschiebbar miteinander gekoppelt sind. Sie sind also teleskopartig relativ zueinander gegen die Elastizität des Federelements, beispielsweise einer Schraubenfeder, beweglich. Während der fliehkraftbedingten Bewegung eines Abdeckelements radial nach außen verhält sich die Koppelstange insoweit starr, als sie ihre Länge nicht ändert. Lediglich dann, wenn in dieser Stellung das Abdeckelement über das thermisch gesteuerte Stellelement geöffnet werden soll, verändert sich die Stangenlänge, das heißt, dass der eine Stangenabschnitt, nämlich der, der am Abdeckelement angeordnet ist, gegen die Elastizität in Richtung des felgenseitig angeordneten Abschnitts bewegt wird, sich mithin also die Koppelstange etwas verkürzt, was das Aufschwenken des Abdeckelements ermöglicht. Die Steifigkeit respektive Federkonstante der integrierten Elastizität definiert die Kraft, die das Stellelement aufzubringen hat, quasi unabhängig davon, wie groß die wirkenden Flieh- oder Zentripetalkräfte momentan sind. Anstelle einer Schraubenfeder kann selbstverständlich auch ein elastisches Kunststoffelement wie beispielsweise ein Gummielement oder dergleichen vorgesehen sein, dessen Federverhalten die Stellkraft definiert.

Alternativ kann die integrierte Elastizität auch dadurch realisiert sein, dass das Koppelelement in sich elastisch biegsam ist. Das heißt, dass das Koppelelement aus einem hinreichend steifen, jedoch in gewissem Maß für das erfindungsgemäße Öffnen durch Überdrücken eigenelastischen Material besteht. Das Koppelelement verbiegt sich also beim Öffnen selbst und geht nach Entlastung wieder in die gestreckte Ausgangsform zurück.

Alternativ zur Integration der Elastizität, also der Feder oder dergleichen in die zweiteilige Koppelstange ist es aber auch denkbar, die Koppelstange einteilig auszuführen und beispielsweise in ihrer Schwenklagerung am Abdeckelement quasi gegen eine Elastizität zu lagern. Das heißt, dass das Abdeckelement bei Betätigung des thermisch gesteuerten Steuerelements aufgedrückt wird und hierbei gegen eine Elastizität im Bereich der Stangenlagerung bewegt wird, wobei diese Elastizität deformiert und gleichzeitig die Koppelstange leicht angehoben wird.

Alternativ zur Verwendung einer Koppelstange als Koppelelement ist es auch denkbar, dass das Koppelelement eine abdeckelementseitig vorgesehene Hülse ist oder umfasst, die von einer die Schwenkachse bildenden Stange durchsetzt ist und mit dieser Stange über eine Kulissenführung zusammenwirkt, wobei die Hülse über die Elastizität am Abdeckelement gelagert ist. Auch bei dieser Erfindungsausgestaltung, die also eine Art Kulissenführung z. B. aus Nut und Führungszapfen im Bereich der Bewegungskopplung Hülse-Stange vorsieht, ist eine Zwangsführung bei einer Bewegung der Abdeckelemente radial nach außen gegeben. Soll trotz hoher wirkender Fliehkräfte das Abdeckelement geöffnet werden, so drückt das thermisch gesteuerte Stellelement wiederum gegen das jeweilige Abdeckelement, das bei dieser Erfindungsausgestaltung relativ zur über die Elastizität am Abdeckelement gelagerten Hülse bewegt wird. Beispielsweise ist hierzu wiederum ein Federelement in Form einer Schraubenfeder oder dergleichen vorgesehen, also eine Drehfeder. Die Hülse bleibt bei dieser über das Stellelement initiierten Bewegung unbewegt, das Abdeckelement wird gegen die Elastizität, also die Feder bewegt, die dabei deformiert wird, bis die Offenstellung erreicht ist. Auch hier ist also zum thermisch gesteuerten Öffnen lediglich die Rückstellkraft der Elastizität zu überdrücken.

Eine dritte Erfindungsalternative sieht schließlich vor, dass das Koppelelement eine auf der Schwenkachse sitzende Hülse ist, die eine mit der Schwenkachse zusammenwirkende Kulissenführung bildet, und die gegen die Elastizität bewegbar gelagert ist. Bei dieser Erfindungsausgestaltung ist die Hülse nicht von der die Schwenkachse bildenden Stange durchsetzt, sondern sitzt an einem Achsabschnitt, über den das Abdeckelement beispielsweise am Felgenaußenkranz schwenkgelagert ist, auf. Die Schwenkachse greift also in die Hülse ein, wo die Kulissenführung beispielsweise in Form eines Kugelgewindetriebs oder Ähnlichem realisiert ist. Die Hülse selbst ist wiederum insoweit mit dem Abdeckelement bewegungsgekoppelt, als bei einer fliehkraftbedingten Radialbewegung des Abdeckelements nach außen die Zwangsführung einsetzt, also das Abdeckelement um die Schwenkachse herum in die Schließstellung geklappt wird. Die Bewegungskopplung zum Abdeckelement ist jedoch auch über die Elastizität insofern elastisch, als trotz wirkender Fliehkraft das Abdeckelement über das thermisch gesteuerte Stellelement wieder aufgedrückt werden kann, wozu wiederum lediglich die Elastizität, auch hier vorzugsweise über eine Schraubenfeder realisiert, zu Überdrücken ist.

Wie einleitend beschrieben, besteht erfindungsgemäß nicht nur die Möglichkeit, in das Koppelelement selbst eine Elastizität zu integrieren. Vielmehr kann erfindungsgemäß das Koppelelement selbst felgen- und/oder abdeckelementseitig gegen eine solche Elastizität gelagert sein. Das Koppelelement, also beispielsweise eine steife Koppelstange, ist folglich gegen ein elastisches Element an der Felge und/oder dem Abdeckelement gelagert, worüber die elastische Beweglichkeit im Bereich des Koppelelements, die die zu überdrückende Elastizität bildet, realisiert wird. Erfindungsgemäß kann eine solche Elastizität mittels eines elastisch deformierbaren Kunststoff- oder Gummielements realisiert sein, gegen das das Koppelelement dann, wenn thermisch bedingt das Abdeckelement in die Offenstellung über das thermisch gesteuerte Stellelement zu drücken ist, bewegt wird. Hierbei kann es sich um ein beliebig geformtes Kunststoff- oder Gummibauteil handeln, bevorzugt beispielsweise einen Kunststoff- oder Gummiring, in den das Koppelelement, also beispielsweise die Koppelstange, mit einem entsprechenden Lagerabschnitt eingreift. Das Kunststoff- oder Gummielement, insbesondere in Form des Rings, ist felgenund/oder abdeckelementseitig entsprechend fixiert, beispielsweise in einer entsprechenden dort vorgesehenen Halterung aufgenommen, oder in entsprechenden, dort vorgesehenen geometrischen Eintiefungen und Ähnlichem.

Weitere Vorteile, Merkmale und Einzelheiten der Erfindung ergeben sich aus dem im Folgenden beschriebenen Ausführungsbeispiel sowie anhand der Zeichnungen. Dabei zeigen:

Fig. 1    eine Prinzipdarstellung eines Teils eines Fahrzeugrads gemäß Stand der Technik im Ruhezustand,

Fig. 2    das Fahrzeugrad aus Fig. 1 in Rotation und geschlossenem Abdeckelement,

Fig. 3    eine Darstellung eines erfindungsgemäßen Fahrzeugrads in Teilansicht mit einem eine integrierte Elastizität aufweisenden Koppelelement, in Rotation mit geschlossenem Abdeckelement,

Fig. 4    das Fahrzeugrad aus Fig. 3 mit über das thermisch gesteuerte Stellelement in die Offenstellung bewegtem Abdeckelement,

Fig. 5    eine Darstellung eines erfindungsgemäßen Fahrzeugrads einer zweiten Ausführungsform in einer Teilansicht im Ruhezustand,

Fig. 6    das Fahrzeugrad aus Fig. 5 mit geschlossenem Abdeckelement in Rotation,

Fig. 7    das Fahrzeugrad aus Fig. 6 mit über das thermisch gesteuerte Stellelement in die Offenstellung bewegtem Abdeckelement,

Fig. 8    eine Darstellung eines erfindungsgemäßen Fahrzeugrads einer dritten Ausführungsform in einer Teilansicht in Rotation mit geschlossenem Abdeckelement,

Fig. 9    das Fahrzeugrad aus Fig. 8 mit über das thermisch gesteuerte Stellelement geöffnetem Abdeckelement,

Fig. 10   eine Teilansicht im Schnitt durch ein erfindungsgemäßes Fahrzeugrad zur Darstellung der Anordnung des thermisch gesteuerten Stellelements in Form eines Dehnstoffarbeitselements,

Fig. 11   zwei Darstellungen eines solchen Dehnstoffarbeitselements zur Erläuterung seiner Funktion,

Fig. 12   eine Darstellung eines erfindungsgemäßen Fahrzeugrads in Teilansicht mit einem Koppelelement mit einer einzigen, doppelt wirkenden integrierten Elastizität, mit in der Offenstellung befindlichem Abdeckelement,

Fig. 13   das Fahrzeugrad aus Fig. 12 mit in die Schließstellung bewegtem Abdeckelement,

Fig. 14   eine Darstellung eines erfindungsgemäßen Fahrzeugrads einer weiteren Ausführungsform in einer Teilansicht mit integrierter doppelt wirkender Elastizität mit in Offenstellung befindlichem Abdeckelement,

Fig. 15   das Fahrzeugrad aus Fig. 14 mit geschlossenem Abdeckelement,

Fig. 16     eine Darstellung eines erfindungsgemäßen Fahrzeugrads einer weiteren Ausführungsform mit lagerungsseitig vorgesehenen Elastizitäten, mit in Offenstellung befindlichem Abdeckelement, und

Fig. 17     das Fahrzeugrad aus Fig. 16 mit in Schließstellung gedrücktem Abdeckelement.

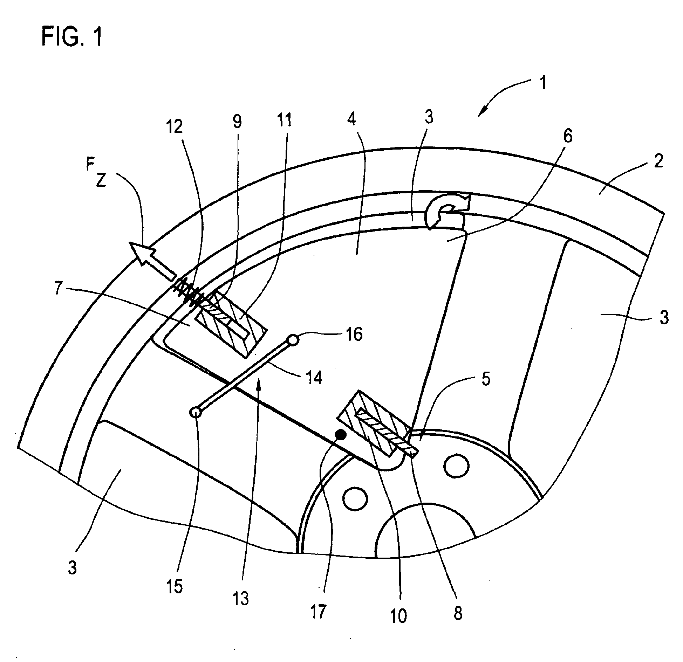

Fig. 1 zeigt eine Darstellung eines Teils eines Fahrzeugrads 1, umfassend eine Felge 2, an der hier nicht näher gezeigt üblicherweise ein Bremstopf und eine am Bremstopf befestigte Bremsscheibe in der Montagestellung befestigt respektive zugeordnet sind. Die Felge 2 weist mehrere der Durchlüftung und Optik dienende Durchbrechungen 3 auf, denen im gezeigten Beispiel jeweils ein plattenförmiges Abdeckelement 4 zugeordnet ist, wobei in Fig. 1 lediglich ein solches Abdeckelement 4 gezeigt ist. Dieses Abdeckelement 4 dient dazu, die jeweilige Durchbrechung 3 großflächig zu verschließen und bei Bedarf zur Durchlüftung zu öffnen.

Hierzu ist das Abdeckelement 4 um eine Schwenkachse 5 um einige Winkelgrade, z. B. 5° - 10° schwenkbeweglich. Bei der Darstellung gemäß Fig. 1 (dies gilt auch für alle Folgedarstellungen) handelt es sich um eine Innenseitenansicht der Felge 2. Die Schwenkbeweglichkeit eines jeden Abdeckelements 4 um die Schwenkachse 5 ist derart, dass jedes Abdeckelement 4 mit seiner in Fig. 1 gezeigten rechten äußeren Ecke 6 zum Felgeninneren, also aus der Zeichenebene zum Betrachter hin herausschwenkt. Die linke obere Ecke 7 hingegen schwenkt in die Zeichenebene, also vom Betrachter weg, zum Felgenäußeren. Dies ist in der in Fig. 1 gezeigten Offenstellung dargestellt, das heißt, dass hier das Abdeckelement 4 in einer geöffneten Position gezeigt ist, in welcher die rechte obere Ecke 6 nach innen, also zum Betrachter hin geschwenkt ist, während die linke obere Ecke 7 nach außen, vom Betrachter weg geschwenkt ist. Es bilden sich also Lüftungsschlitze aus. Die Schwenklagerung ist hier über zwei Achsstifte 8, 9 realisiert, die längsbeweglich in entsprechenden Halterungen 10, 11, die an der Innenseite eines jeden Abdeckelements 4 angeordnet sind, aufgenommen sind. Beide Achsstifte 8, 9 sind lagefest an der Felge 2 in entsprechenden Aufnahmen fixiert.

Die radial außenliegende Halterung 11 ist gegen ein Federelement 12 gelagert, im gezeigten Beispiel eine Schraubenfeder. Dieses Federelement 12 dient dazu, eine Rückstellkraft auf das Abdeckelement 4 auszuüben, wenn dieses, worauf nachfolgend noch eingegangen wird, zentripetalkraftbedingt bei einer Raddrehung nach außen wandert.

Vorgesehen ist ferner ein Koppelelement 13, hier in Form einer starren Stange 14, die an der Felge 2 sowie am Abdeckelement 4 über jeweilige Kugelgelenklagerungen 15, 16 gelagert ist, das heißt sie ist über diese Kugelgelenklagerungen 15, 16 relativ zur Felge 2 bzw. dem Abdeckelement 4 beweglich aufgenommen.

Vorgesehen ist ferner ein hier nur prinzipiell dargestelltes, thermisch gesteuertes Stellelement 17, bei dem es sich wie im Stand der Technik üblich um einen Bimetallaktor oder einen Formgedächtnislegierungsaktor handelt. Dieses Stellelement 17 ist am Fahrzeugrad 1 vorgesehen, oder dem Fahrzeugrad zugeordnet. Es kann an der Felge oder am Bremstopf angeordnet sein. Über dieses Stellelement 17 wird lokal ein Druck auf die in den Figuren gezeigte Innenseite des Abdeckelements 4 ausgeübt. Dieser Druck dient dazu, das Abdeckelement 4 aus seiner geschlossenen Stellung in die geöffnete Stellung zu bewegen, also um die Schwenkachse 5 zu schwenken.

Fig. 1 zeigt das Fahrzeugrad in der Ruhestellung bzw. bei sehr niedriger Drehzahl. Es wirkt keine bzw. eine sehr geringe Zentripetalkraft auf die Abdeckelemente 4, die sich noch in der geöffneten Stellung befinden.

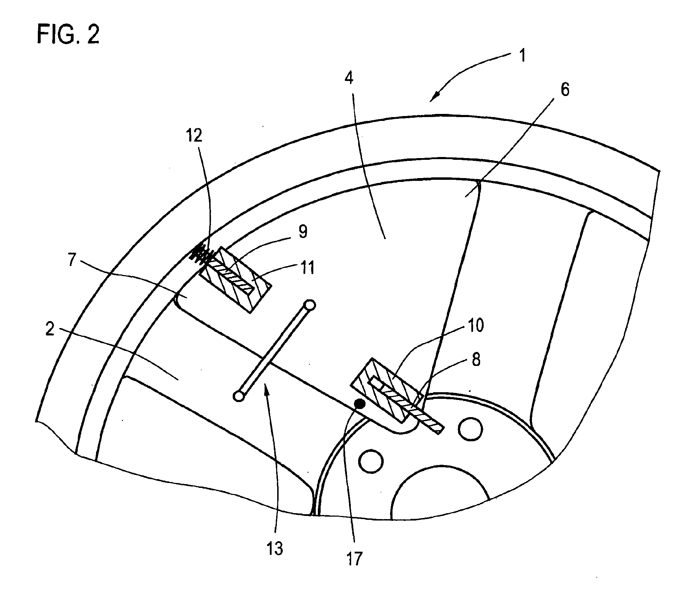

Dreht das Fahrzeugrad schneller, fährt also das Kraftfahrzeug, an dem sich das jeweilige Rad befindet, schneller, so nimmt die wirkende Zentripetalkraft zu, wie in Fig. 1 mit $F_Z$ dargestellt ist. Dies führt dazu, dass die einzelnen Abdeckelemente 4 längs der Schwenkachse 5 radial nach außen wandern, eine radiale Längsbewegung um wenige Millimeter bis Zentimeter ist konstruktionsbedingt gegeben. Bedingt durch die über das starre Koppelelement 13 realisierte Kopplung zwischen Felge 2 und Abdeckelement 4 kommt es während dieser radialen Längsbewegung dazu, dass eine der Längsbewegung überlagerte Schwenkbewegung einsetzt, die das jeweilige Abdeckelement in die Schließstellung zwingt. Das Koppelelement 13 bewirkt also eine Zwangsbewegung von der Offen- in die Schließstellung. Ersichtlich, siehe Fig. 2, befindet sich das Abdeckelement radial gesehen etwas weiter außen, der innere Achsstift 8 ist etwas aus der Halterung 10 gewandert, der äußere Achsstift 9 liegt weiter innen in der Halterung 11. Das rechte Eck 6 und das linke Eck 7 sind in der jeweils eingeschwenkten, also in der Zeichenebene liegenden Position, die Durchbrechung 3 ist geschlossen. Infolge der Radialbewegung ist auch das Federelement 12 komprimiert, dieses übt eine Rückstellkraft auf das Abdeckelement 4 aus. Nimmt die Drehzahl wieder ab, so führt diese Rückstellkraft dazu, dass sich das jeweilige Abdeckelement 4 wieder öffnet, wenn über die Rückstellkraft die Zentripetalkraft $F_Z$ wieder überdrückt werden kann.

Soll nun bei höherer Fahrgeschwindigkeit aufgrund der thermischen Gegebenheiten das jeweilige Abdeckelement 4 wieder geöffnet werden, so muss über das Stellelement 17 ein derart hoher Druck aufgebaut werden, dass infolge der starren Kopplung über das Koppelelement 13 eine hohe und der Zentripetalkraft $F_Z$ entgegenwirkende Kraft ausgeübt wird, die das Abdeckelement 4 auf dem gleichen Bewegungs- und Schwenkweg zurückbewegt, so dass es die in Fig. 1 gezeigte Offenstellung einnimmt. Die Zentripetalkraft $F_Z$ kann dabei beachtlich groß werden, abhängig von der Rotationsgeschwindigkeit, weshalb zwangsläufig über das Stellelement eine entsprechend hohe Gegenkraft zum Öffnen aufgebaut werden müsste. Dies ist im Stand der Technik bei Verwendung von Bimetallstreifen und Ähnlichem jedoch kaum zu bewerkstelligen.

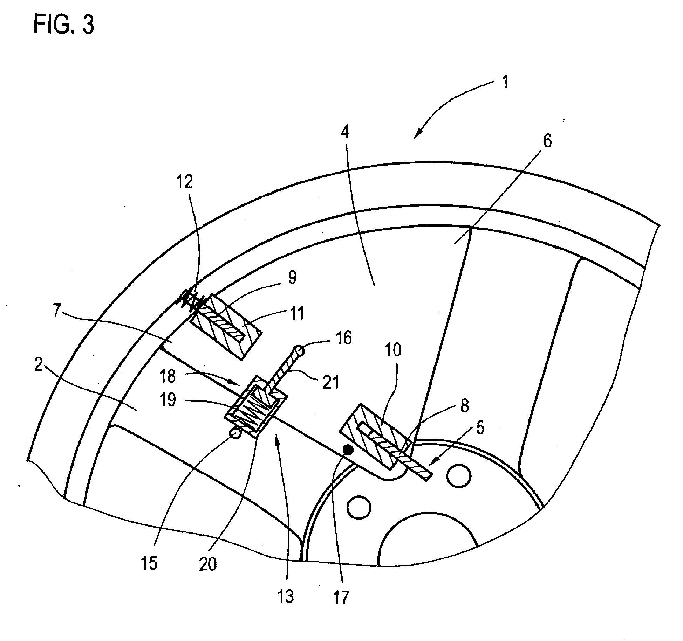

Demgegenüber zeigt beispielsweise Fig. 3 ein erfindungsgemäßes Fahrzeugrad 1, wobei für gleiche Bauteile gleiche Bezugszeichen verwendet werden. Das Fahrzeugrad 1 umfasst ebenfalls eine Felge 2 mit diversen Durchbrechungen 3 sowie diesen jeweils zugeordnete Abdeckelemente 4. Diese sind wiederum um eine Schwenkachse 5 verschwenkbar, die Schwenkachse 5 ist über geeignete Achsstifte 8, 9 mit entsprechenden Halterungen 10, 11 am Abdeckelement 4 realisiert. Wiederum ist ein Federelement 12 vorgesehen, das beim radialen nach außen Wandern komprimiert wird und die Rückstellkraft, die zum Zurückführen bei hinreichend niedriger Drehzahl dient, aufbaut.

Vorgesehen ist wiederum ein Koppelelement 13, das hier jedoch eine integrierte Elastizität 18 aufweist, hier realisiert in Form eines Federelements 19, beispielsweise einer Schraubenfeder. Das Koppelelement 13 ist wiederum über zwei Kugelgelenklagerungen 15, 16 felgen- und abdeckelementseitig gelagert. Es besteht aus einem quasi zylinderartigen Elementbauteil 20, in dem das Federelement 19 angeordnet ist, sowie einem quasi kolbenartig darin geführten Elementbauteil 21.

Fig. 3 zeigt das Fahrzeugrad 1 in Rotation, die Rotationsgeschwindigkeit ist so groß, dass die Zentripetalkraft dazu führt, dass die Abdeckelemente 4 radial nach außen wandern und von der vormals geöffneten Stellung, in denen also die Ecken 6, 7 ausgeschwenkt sind, in die Schließstellung wandert. Die der radialen Längsbewegung überlagerte Schwenkbewegung wird auch hier über das trotz Integration der Elastizität 18 hinreichend steife Koppelelement 13 erzwungen, auch hier ist also eine Zwangskopplung realisiert.

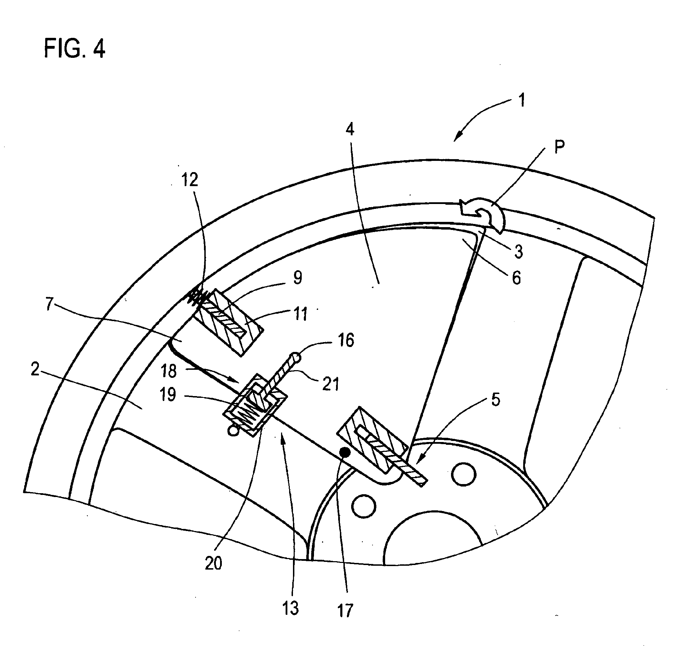

Soll nun jedoch aufgrund der insbesondere im Bereich der Bremse herrschenden Temperaturen eine Durchbrechung 3 teilweise geöffnet werden, um einen Luftstrom durch die Felge zu ermöglichen, so ist dies mittels eines thermisch gesteuerten Stellelements in Form eines Bimetallstreifens oder insbesondere eines Dehnstoffarbeitselements möglich, da aufgrund der koppelelementseitig integrierten Elastizität 18 nicht mehr eine derart hohe Kraft, die größer als die wirkende Zentripetalkraft ist, aufzubringen ist, sondern eine wesentlich geringere Kraft. Drückt das Stellelement auf die Innenseite des Abdeckelements 4, so schwenkt dieses um die Schwenkachse 5, während welcher Bewegung das Koppelelement quasi gestaucht wird, siehe Fig. 4. Infolge der integrierten Elastizität 18, also der teleskopartigen, instabilen Ausführung des Koppelelements 13, ist es möglich, mit relativ geringem Kraftaufwand dieses zu deformieren, es muss lediglich der Widerstand, den die Elastizität 18 bildet, über das Stellelement 17 überdrückt werden. Das Abdeckelement 4 selbst behält seine radial ausgefahrene Stellung, es schwenkt lediglich um die Schwenkachse 5 unter gleichzeitiger Überdrückung respektive Deformation des Federelements 19. Die Position respektive Orientierung des Koppelelements 13 bleibt im Wesentlichen erhalten, da es sich lediglich verkürzt, jedoch keine Radialbewegung vorkommt. Ersichtlich wird das rechte Eck 6 aus der Zeichenebene zum Betrachter hin geschwenkt, während das linke Eck 7 in die Zeichenebene vom Betrachter weg geschwenkt wird. Der Druckpunkt, an dem das Stellelement 17 seine Kraft auf das Abdeckelement 4 einbringt, liegt - radial gesehen - in den jeweiligen Figuren links von der Schwenkachse 5. Da der Anbindungspunkt des Kugelgelenks 16 jedoch rechts, also auf der anderen Schwenkachsenseite liegt, kommt es infolge des Aufschwenkens aus der Zeichenebene dieses rechts von der Schwenkachse liegenden Abdeckelementabschnitts zur "Stauchung" des Koppelelements 13.

Sobald das Stellelement 17 den Druck reduziert, also entlastet, drückt die integrierte Elastizität 18, also das Federelement 19, das Elementbauteil 21 wieder aus dem Elementbauteil 20 heraus, das Koppelelement 13 längt sich wieder, worüber das Abdeckelement 4 wieder in die Schließstellung gedrückt wird, wie sie in Fig. 3 gezeigt ist. All dies geschieht während der Rotation des Fahrzeugrads 1, die wie daraus resultierend auch die Zentripetalkraft $F_Z$ beliebig groß sein kann, da die Rotationsgeschwindigkeit und die Zentripetalkraft $F_Z$ zur über das Stellelement 17 initiierten Öffnung des Abdeckelements 4 keine Rolle spielt.

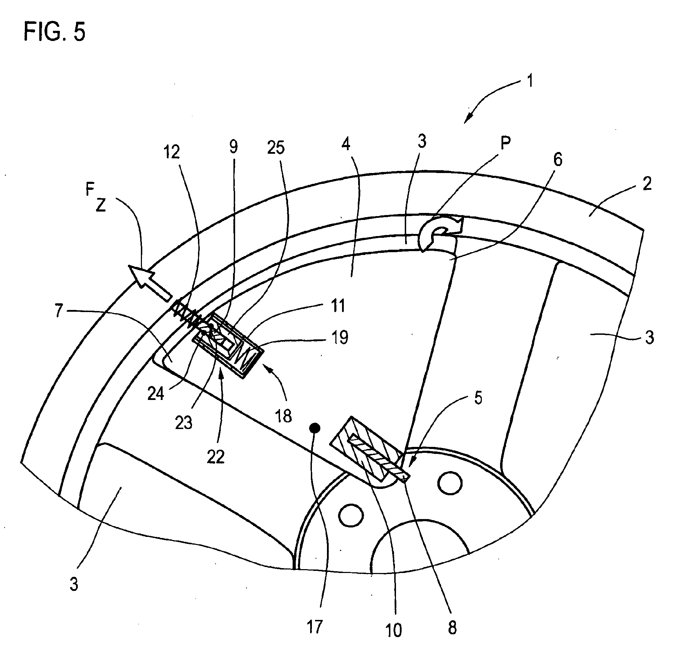

Fig. 5 zeigt eine weitere erfindungsgemäße Ausführungsform eines Fahrzeugrads 1 umfassend wiederum eine Felge 2 mit Durchbrechungen 3 sowie diesen jeweils zugeordneten Abdeckelementen 4, wobei auch hier wiederum nur ein Abdeckelement gezeigt ist. Dieses ist wiederum über eine Schwenkachse 5 gebildet durch die beiden Achsstifte 8, 9 und ihre jeweiligen Halterungen 10, 11 realisiert.

Vorgesehen ist auch hier ein Koppelelement 13, das hier jedoch anders ausgeführt ist als bezüglich der vorstehenden Figuren. Das Koppelelement 13 ist hier als Kugelgewindetrieb 22 ausgeführt. Der Achsstift 9 ist drehfest an der Felge angeordnet. An ihm ist, nur exemplarisch gezeigt, ein Außengewinde 23 vorgesehen, in dem, wiederum nur exemplarisch gezeigt, Kugeln 24 laufen, die an einer Kugelhülse 25 vorgesehen sind. Die Kugelhülse 25, die quasi eine Art Mutter bildet, ist wiederum drehfest in der Halterung 11, die also eine Art Außenhülse darstellt, aufgenommen. In der Halterung 11 ist wiederum eine Elastizität 18 vorgesehen, auch hier in Form einer Schraubenfeder 19, gegen die die Hülse 25 gelagert ist.

Fig. 5 zeigt das Fahrzeugrad 1 in der Ruhestellung respektive bei niedriger Drehzahl, die Abdeckelemente 4 sind in der ausgeschwenkten Offenstellung, die Ecken 6 und 7 sind folglich aus der Zeichenebene herausgeschwenkt.

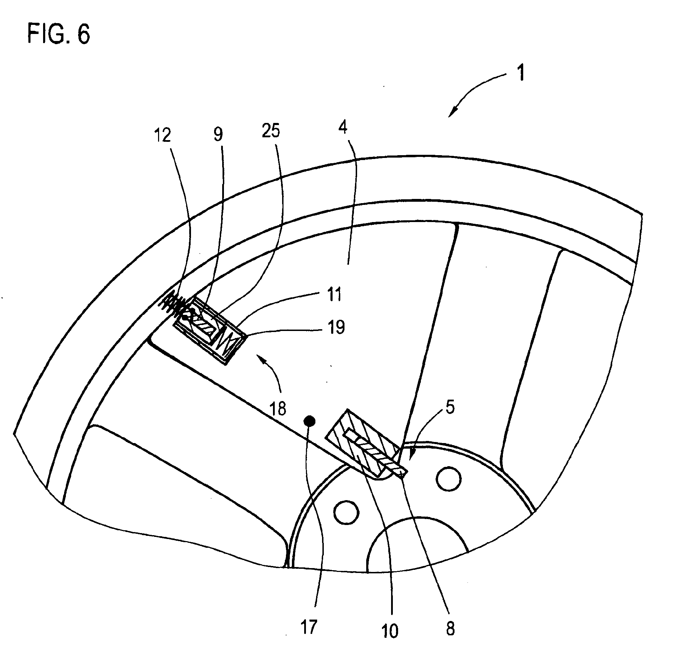

Dreht nun das Fahrzeugrad schneller, so nimmt die Zentripetalkraft $F_Z$ zu, was dazu führt, dass das Abdeckelement 4 radial nach außen wandert, wie auch bei der Ausführungsform zuvor beschrieben. Infolge der drehfesten Anordnung des Achsstifts 9 und der Hülse 25 kommt es über die Kugelgewindetriebkopplung dazu, dass bei dieser radialen Längsbewegung über den Kugelgewindetrieb eine erzwungene Schwenkbewegung um die Schwenkachse 5 erfolgt, die dazu führt, dass die Abdeckelemente 4 in die Schließstellung schwenken. Diese Position ist in Fig. 6 dargestellt. Ersichtlich ist das gezeigte Abdeckelement 4 ein Stück weit radial nach außen gewandert, der Achsstift 8 greift nicht mehr so weit in die Halterung 10 ein, während der Achsstift 9 weiter in der Hülse 25 aufgenommen ist. Das Federelement 12 ist komprimiert. Die Elastizität 18, also die Schraubenfeder 19, ist noch nicht beansprucht, da sie während dieser radialen Längs- und Schwenkbewegung nicht nennenswert beansprucht wird.

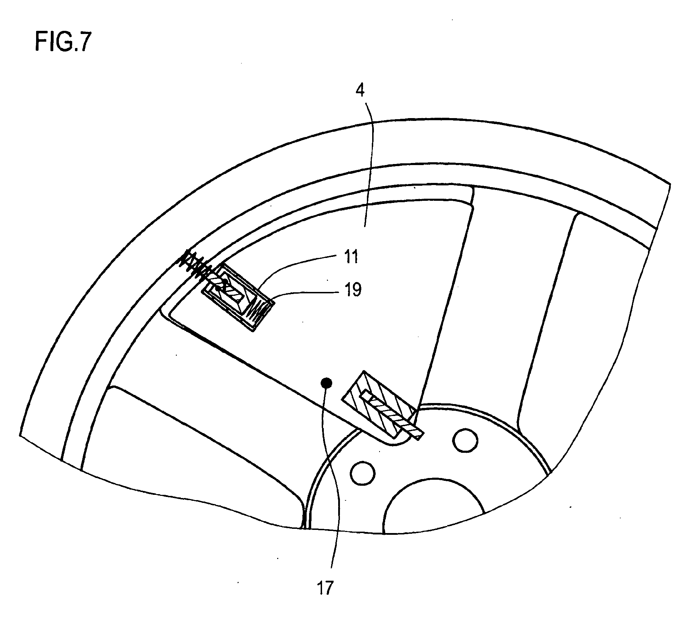

Soll nun über das auch hier vorgesehene thermisch gesteuerte Stellelement 17, wie beispielsweise ein Dehnstoffarbeitselement, bei hoher Drehzahl das jeweilige Abdeckelement 4 geöffnet werden, so drückt das Stellelement 17 wiederum auf die Innenseite des jeweiligen Abdeckelements. Infolge des Drucks kommt es nun dazu, dass die Hülse 25, die drehfest mit der Halterung 11 verbunden ist, die ihrerseits wiederum drehfest an dem Abdeckelement 4 angeordnet ist, um die Schwenkachse 5 gedreht wird, und zwar in einer Richtung entgegengesetzt zur Bewegungsrichtung während der Radialbewegung nach außen. Infolge der Kopplung der Hülse 25 mit dem drehfest an der Felge befindlichen Achsstift 9 über den Kugelgewindetrieb 22 kommt es nun dazu, dass die Hülse 25 etwas, nämlich drehwinkelabhängig, in das Innere das Aufnahme 11 wandert, dabei das Federelement 19, also die Elastizität komprimierend, wie in Fig. 7 dargestellt ist. Die radiale Lage des Abdeckelements 4 bleibt hierbei unverändert, da letztlich lediglich die Hülse 25 etwas längs der Schwenkachse wandert, diese Wanderbewegung wird jedoch, da die Hülse 25 zwar drehfest, jedoch axial beweglich in der Aufnahme 11 angeordnet ist, nur auf das Federelement 19, dieses komprimierend übertragen. Auch hier ist also letztlich wiederum nur das Federelement 19 zu Überdrücken, der Widerstand, den der Kugelgewindetrieb 22 darstellt, ist demgegenüber vernachlässigbar. Das heißt, dass auch hier mit relativ geringer Kraft auch bei hoher Drehgeschwindigkeit das jeweilige Abdeckelement 4 geöffnet werden kann, ohne dass die aufzubringende Kraft auch nur näherungsweise in der Größenordnung der herrschenden, beachtlich hohen Zentripetalkraft $F_Z$ liegt.

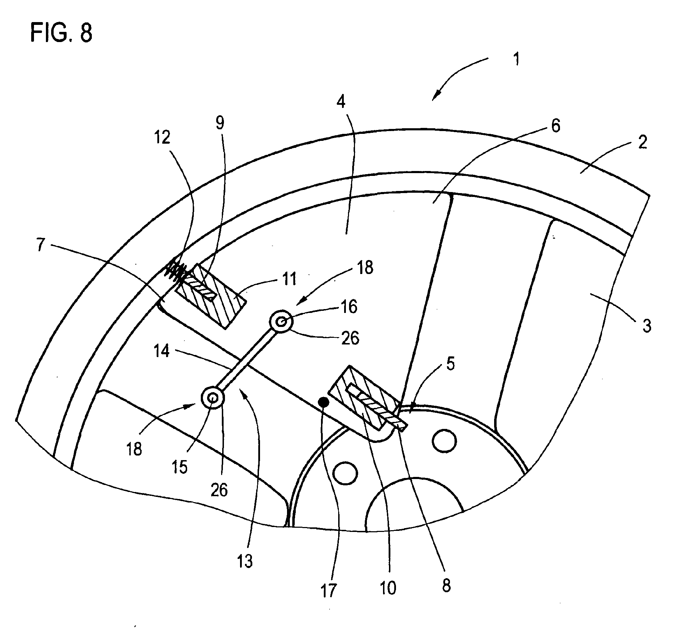

Fig. 8 zeigt eine weitere erfindungsgemäße Ausführungsform eines Fahrzeugrads 1, wiederum umfassend eine Felge 2 mit Durchbrechungen 3 und zugeordneten Abdeckelementen 4, die um eine Schwenkachse 5 gebildet über die bereits beschriebenen Achsstifte 8, 9 in ihren jeweiligen Halterungen 10, 11 schwenkgelagert sind.

Das Koppelelement 13 ist hier wiederum als steife Stange 14 ausgeführt, die hier einstückig ist, jedoch im Bereich ihrer Lagerungen 15, 16, die nicht zwingend als Kugelgelenklagerungen ausgeführt sein müssen, über entsprechende Elastizitäten 18 an der Felge 2 bzw. dem Abdeckelement 4 gelagert ist. Das heißt, dass hier die Elastizität nicht quasi koppelelementseitig integriert ist, sondern in den Bereich der jeweiligen Lagerungen des Koppelelements an der Felge bzw. dem Abdeckelement 4 gesetzt ist. Die Elastizitäten 18 sind beispielsweise in Form von Gummi- oder Kunststoffringen 26 realisiert, die an entsprechenden Aufnahmen an der Felge und am Abdeckelement fixiert sind.

Fig. 8 zeigt das Fahrzeugrad 1 wieder in Rotation, die Abdeckelemente 4 sind radial nach außen gewandert, die in der Ruheposition ausgeschwenkten Abdeckelemente 4, in der sie die jeweilige Durchbrechung 3 teilweise öffnen, sind über das Koppelelement 13 parallel zur radialen Auswärtsbewegung auch in die Schließstellung geschwenkt, die jeweiligen Ecken 6, 7 liegen also quasi in der Zeichenebene und schließen die jeweilige Durchbrechung.

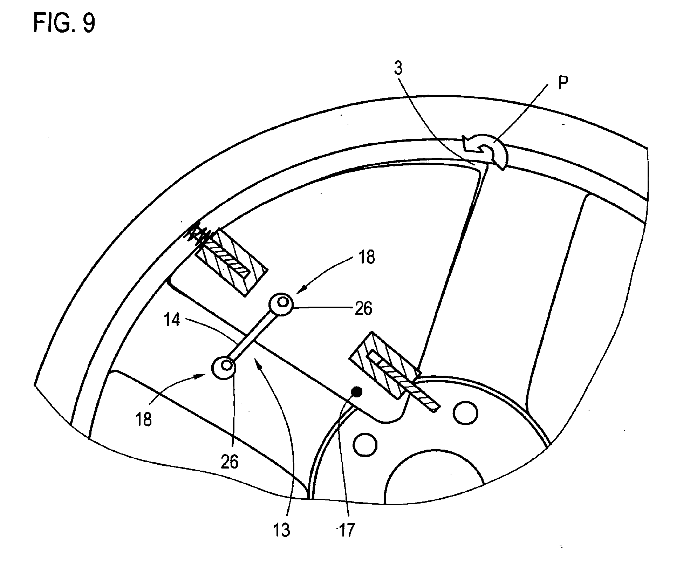

Soll nun über das jeweilige einem Abdeckelement 4 zugeordnete thermisch gesteuerte Stellelement 17 trotz hoher Rotationsgeschwindigkeit und damit hoher wirkender Zentripetalkraft das jeweilige Abdeckelement 4 wieder geöffnet werden, so wird über das Stellelement 17 wiederum ein Druck auf die Innenseite des Abdeckelements 4 ausgeübt. Dieser Druck führt dazu, dass das jeweilige Abdeckelement 4 eine Schwenkbewegung vollzieht, während welcher Schwenkbewegung, siehe Fig. 9, das starre Koppelelement 13 die zugeordneten Elastizitäten 18, also die Gummi- oder Kunststoffringe 26, deformiert. Diese Elastizitäten 18 bauen hierbei wiederum eine Rückstellkraft auf. Es kommt also zu der Ausschwenkbewegung, worüber die Durchbrechung 3 leicht geöffnet wird. Gleichzeitig ist auch bei dieser Erfindungsausgestaltung lediglich ein Überdrücken der Rückstellkraft der Gummi- oder Kunststoffringe 26 erforderlich, ein Arbeiten gegen die Zentripetalkraft ist auch hier nicht erforderlich. Das heißt, dass auch hier nur eine verglichen mit der Zentripetalkraft $F_Z$ relativ geringe Kraft aufbringendes Stellelement 17 verwendet werden kann, um trotz hoher Rotationsgeschwindigkeit bei Erreichen der thermischen Stellbedingung das jeweilige Abdeckelement öffnen und eine Durchlüftung ermöglichen zu können. Bei Entlastung des Stellelementdrucks drücken die sich entspannenden Elastizitäten 18 die Abdeckelemente 4 wieder in die Schließstellung.

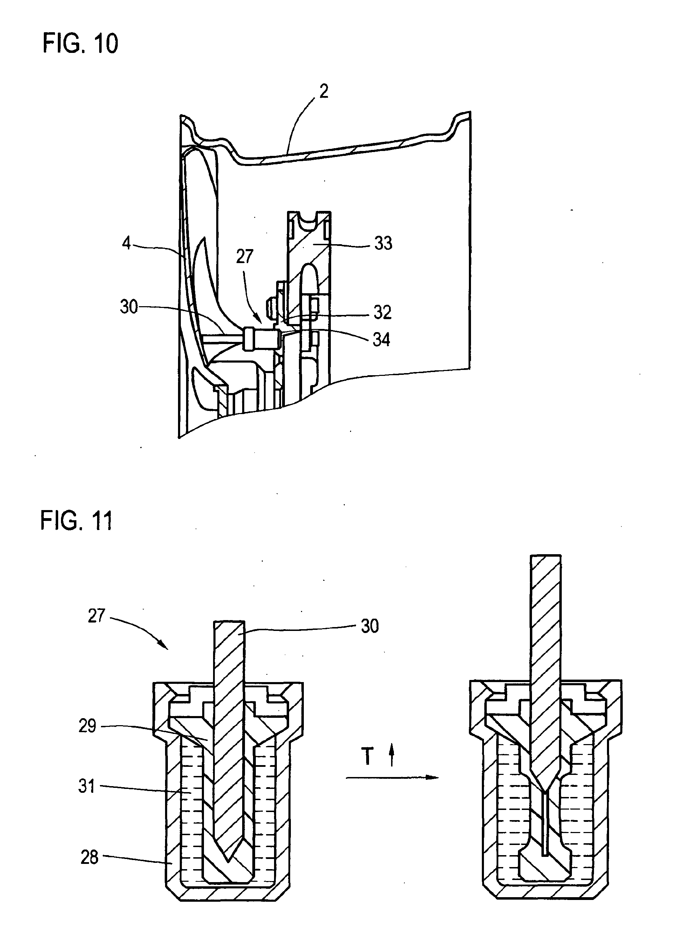

Wie bereits beschrieben, wird als thermisch gesteuertes Stellelement bevorzugt ein Dehnstoffarbeitselement verwendet. Ein solches Dehnstoffarbeitselement ist in Fig. 11, seine Anordnung bezogen zum Fahrzeugrad 1 in Fig. 10 gezeigt.

Ein Dehnstoffarbeitselement arbeitet nach dem sogenannten Dehnstoff-Hochdruck-Prinzip. Fig. 11 zeigt ein solches Dehnstoffarbeitselement 27, bestehend aus einem druckfesten Gehäuse 28, das an einer Seite offen ist. An dieser Seite ist ein flexibler Einsatz 29 vorgesehen, der das Gehäuse dort schließt. Er erstreckt sich tief in das Innere des Gehäuses 28. In dem Einsatz, beispielsweise bestehend aus einer Membran oder einem Elastomer, also aus einem flexiblen Material, ist ein Hubkolben 30 geführt.

Das Gehäuse 28 selbst ist mit einem Dehnstoff 31 gefüllt, beispielsweise einem Wachs, Hartparafin oder einem Öl. Dieses füllt den gesamten Raum zwischen Gehäuse 28 und flexiblen Einsatz 29 aus.

Erwärmt sich der Dehnstoff 31, so kommt es zu einer großen Volumenzunahme des Dehnstoffs, die dazu führt, dass der Hubkolben 30 dem Einsatz 29 und damit aus dem Gehäuse 28 herausgedrückt wird, wie in Fig. 11 gezeigt ist. Der Einsatz 29 schnürt sich, bedingt durch die Dehnstoffausdehnung, ein, worüber das Herausdrücken des Hubkolbens 30 bewerkstelligt wird. Mit dieser Hubbewegung kann das Dehnstoffarbeitselement 27 folglich seine Stellfunktion ausüben.

Die Rückstellung erfolgt auf einfache Weise dadurch, dass sich der Dehnstoff 31 wieder abkühlt, mithin also sein Volumen wieder reduziert, woraufhin der Hubkolben 30, der ja eine rückstellende Gegenkraft über das Abdeckelement erfährt, wieder in das Innere des flexiblen Einsatzes 29 gedrückt wird.

Ein solches Dehnstoffarbeitselement 27 wird erfindungsgemäß bevorzugt am Bremstopf 32, der wiederum die Bremsscheibe 33, beispielsweise ein Keramikbremsscheine, trägt, angeordnet. Hierzu ist bevorzugt eine entsprechende Bohrung 34 am Bremstopf vorgesehen, die so bemessen ist, dass das Gehäuse 28 darin sicher befestigt werden kann. Der Hubkolben 30 steht in Richtung der Innenseite des jeweils benachbarten Abdeckelements 4 vor.

Aufgrund der Anordnung des Dehnstoffarbeitselements 27 an dem Bremstopf 32 findet ein sehr schneller Wärmeübergang von der sich stark erhitzenden Bremsscheibe auf das Dehnstoffarbeitselement 27 statt. Hierüber kann also sehr schnell und genau erfasst werden, wann die Bremsscheibe eine bestimmte Temperatur erreicht bzw. ein Temperaturgradient gegeben ist, ab der oder dem eine zusätzliche Kühlung über eine Durchlüftung durch die Felge 2 hindurch erforderlich ist. Natürlich entspricht die Temperatur am Bremstopf 32 nicht der Temperatur an der Bremsscheibe, jedoch folgt infolge der sehr guten thermischen Kopplung zwischen Bremstopf 32 und Bremsscheibe 33 der Temperaturgradient am Bremstopf sehr schnell dem Temperaturgradienten an der Bremsscheibe.

Erwärmt sich nun der Dehnstoff 31 des Dehnstoffarbeitselements 27, so wird der Hubkolben 30 nach außen gedrückt. Während dieser Längsbewegung drückt er auf die Innenseite des benachbarten Abdeckelements 4, so dass dieses, wie bezüglich der Ausführungsformen gemäß den Figuren 3 - 9 beschrieben, mit relativ geringem Kraftaufwand das jeweilige Abdeckelement 4 trotz hoher herrschender Zentripetalkraft aufdrücken kann.

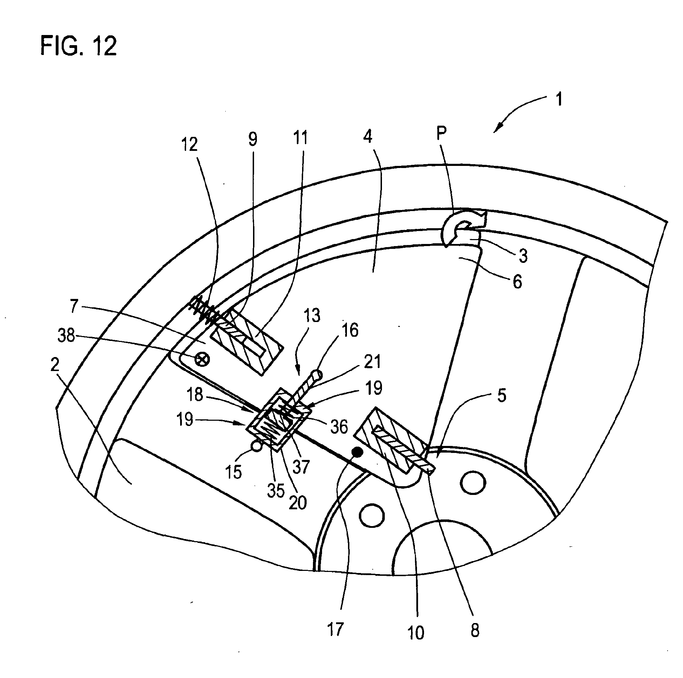

Fig. 12 zeigt eine weitere Ausführungsform eines erfindungsgemäßen Fahrzeugrads 1, bei dem am Koppelelement 13 eine doppelt wirkende Elastizität 18 vorgesehen ist. Fig. 12 zeigt das ruhende Fahrzeugrad 1 mit in Offenstellung befindlichem Abdeckelement 4. Die rechte obere Ecke 6 ist nach innen, also zum Betrachter hingeschwenkt, während die linke obere Ecke 7 nach außen, vom Betrachter weggeschwenkt ist.

Das Koppelelement 13 besteht, wie beim Ausführungsbeispiel gemäß Fig. 3, aus einem quasi zylinderartigen Elementbauteil 20, sowie einem quasi kolbenartig darin geführten Elementbauteil 21. In dem zylinderartigen Elementbauteil 20 ist die integrierte Elastizität 18 angeordnet, die hier doppelt wirkend ist und mittels zweier Federelemente 19 realisiert ist, auch hier mittels zweier Schraubenfedern 35, 36 realisiert ist. Die Schraubenfedern 35, 36 liegen an unterschiedlichen Seiten des Kolbens 37 des Elementbauteils 21 an, sind also an dem Kolben 37 abgestützt, an der anderen Seite jeweils am zylinderartigen Elementbauteil 20. Das heißt, dass der Kolben 37 letztlich in beiden Bewegungsrichtungen gegen jeweils eine Schraubenfeder 35, 36 gelagert ist.

Die Schraubenfeder 35 hat die gleiche Funktion wie die Schraubenfeder gemäß Fig. 3, die das dortige Federelement 19 bildet. Sie dient dazu, die Kraft zu begrenzen, die, den Ausführungen bezüglich der Figuren 3 und 4 folgend, zum Begrenzen der Kraft beim Übergang von der Schließstellung in die Offenstellung, realisiert über das Stellelement 17, aufzubringen ist.

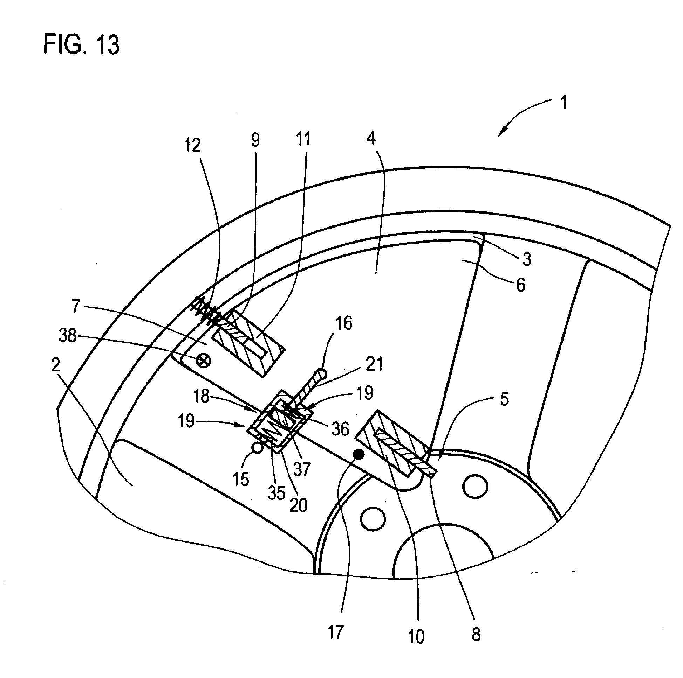

Die zweite Schraubenfeder 36 dient dazu, die Kraft zum Bewegen des Abdeckelements 4 von der in Fig. 12 gezeigten Offenstellung in die in Fig. 13 gezeigte Schließstellung zu begrenzen.

Es sei angenommen, dass von der Außenseite, wie durch das Symbol 38 in Fig. 12 dargestellt ist, auf das ausgeschwenkte Eck 7 der Abdeckplatte gedrückt wird. Dies führt dazu, dass es zu einer Verschwenkung um die Schwenkachse 5 kommt, ohne jedoch die Zwangskopplung zu betätigen, mithin also das Abdeckelement 4 nicht längs der Schwenkachse 5 zu verschieben. Denn bei Druck auf die Ecke 7 wird das Federelement 36, siehe Fig. 13, zusammengedrückt, während sich das Federelement 35 etwas längt. Es ist also zum Einschwenken, beispielsweise beim Anstoßen an eine Bordsteinkante oder zum unbewussten oder bewussten manuellen Eindrücken, lediglich erforderlich, die Elastizität 18, hier realisiert über die Schraubenfeder 36, zu überdrücken, also die Schraubenfeder 36 zusammenzudrücken. Unterstützend wirkt die sich entspannende Schraubenfeder 35. Es kommt zu einer leichten Einschwenkbewegung des Koppelelements 13, jedoch nicht zu einer axialen Zwangsführung. Die Einschwenkbewegung ist in Fig. 12 mit dem Pfeil P dargestellt.

An dieser Stelle sei darauf hingewiesen, dass selbstverständlich auch die Möglichkeit besteht, nur eine einfach wirkende Elastizität 18 vorzusehen, die die benötigte Kraft für die beschriebene Einschwenkbewegung begrenzt. In diesem Fall würde lediglich die Schraubenfeder 36 vorgesehen sein, die Schraubenfeder 35 wäre nicht integriert. Das heißt, dass die Elastizität also nur einseitig wirkend ist. In diesem Fall wäre lediglich die Bewegung von der Offenstellung in die Schließstellung entkoppelt, also kraftmäßig begrenzt, nicht aber die Bewegung von der Schließstellung in die Offenstellung, wie dies bei der Ausführungsform gemäß der Figuren 3 und 4 der Fall wäre.

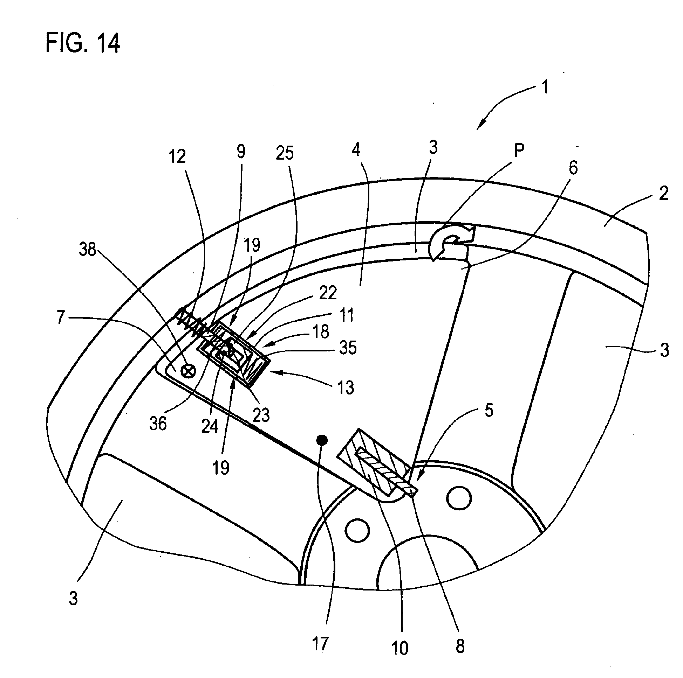

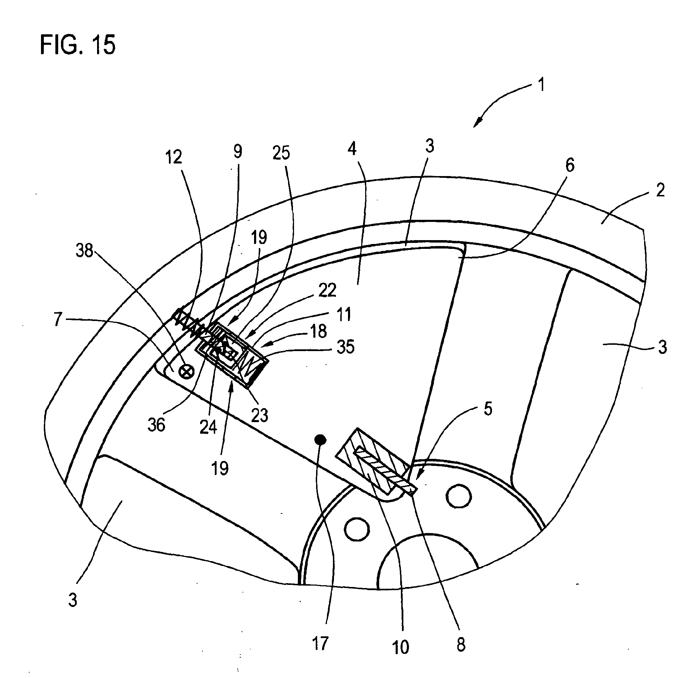

Die Figuren 14 und 15 zeigen ein weiteres Ausführungsbeispiel eines erfindungsgemäßen Fahrzeugrades. Dieses entspricht, was die Ausgestaltung des Koppelelements 13 angeht, der Ausführungsform gemäß der Figuren 5 und 6. Auch hier ist aber im Unterschied zu der Ausführungsform nach den Figuren 5 und 6 eine doppelt wirkende Elastizität 18 integriert, wiederum realisiert mittels zweier Federelemente 19 in Form zweier separater Schraubenfedern 35, 36. Das Koppelelement 13 ist hier als Kugelgewindetrieb 22 ausgeführt. Der Achsstift 9 ist drehfest an der Felge angeordnet. An ihm ist, nur exemplarisch gezeigt, ein Außengewinde 23 vorgesehen, in dem, wiederum nur exemplarisch gezeigt, Kugeln 24 laufen, die an einer Kugelhülse 25 vorgesehen sind. Die Kugelhülse 25, die quasi eine Art Mutter bildet, ist wiederum drehfest in der Halterung 11 aufgenommen. Die Halterung 11 ist also eine Art Außenhülse. Die Hülse 25 ist wiederum fest am Abdeckelement 4 angeordnet.

Im Inneren der Halterung 11 sind die beiden Schraubenfedern 35, 36 angeordnet. Die eine Schraubenfeder 35 greift am Boden der Halterung 11 an, das andere Ende ist an der Unterseite der Hülse 25 aufgelagert. Die andere Schraubenfeder 36 greift an der Oberseite der Hülse 25 und am anderen Ende der Halterung 11 an. Das heißt, dass die Hülse 25 (ähnlich wie der Kolben 37 gemäß der Ausführungsform nach den Figuren 12 und 13) an beiden Seiten gegen jeweils eine Schraubenfeder 35, 36 gelagert ist.

Der Schraubenfeder 35 kommt wiederum die gleiche Funktion zu wie der die einfach wirkende Elastizität 18 in Fig. 5 bildende Schraubenfeder 19. Sie dient zur Kraftbegrenzung beim Übergang von der Schließstellung in die Offenstellung, resultierend durch eine Aktion des Stellelements 17. Hierüber wird trotz wirkender hoher Zentripetalkraft die Kraft zum Bewegen des Abdeckelements wie beschrieben begrenzt.

Die zweite Schraubenfeder 36 dient zur Begrenzung der aufzuwenden Kraft, um bei ruhendem oder sich langsam drehendem Fahrzeugrad ein die Kraft zum Bewegen von der in Fig. 14 gezeigten Offenstellung in die in Fig. 15 gezeigte Schließstellung zu begrenzen. Auch hier ist durch das Symbol 38 dargestellt, dass von außen, also aus der Zeichenebene heraus, auf die ausgeschwenkte Ecke 7 des Abdeckelements 4 gedrückt wird. Dies führt dazu, dass es zu einer Verdrehung der Halterung 11 und damit der Hülse relativ zum lagefesten Achsstift 9 kommt. Die Hülse 25 wandert nun etwas längs des Achsstifts 9 nach außen, so dass die Schraubenfeder 36 komprimiert wird, während die Schraubenfeder 35 etwas gelängt wird, siehe Fig. 15. Das Abdeckelement 4 kann einschwenken, es geht in die in Fig. 15 gezeigte Schließstellung über, ohne dass es zu einer nennenswerten Längsverschiebung des Abdeckelements entlang der Schwenkachse 5 kommt. Denn auch hier ist die Bewegung über die integrierte Schraubenfeder 36, mithin also die Elastizität 18, auch in dieser Bewegungsrichtung entkoppelt, wie dies auch bei der Ausgestaltung gemäß der Figuren 12 und 13 der Fall ist.

Auch hier gilt, dass selbstverständlich auch nur eine einfach wirkende Elastizität 18 vorgesehen sein kann, die kraftbegrenzend bei einer Bewegung von der Offenstellung gemäß Fig. 14 in die Schließstellung gemäß Fig. 15 wirkt. In diesem Fall wäre nur die Schraubenfeder 36 zur Bildung der Elastizität 18, die dann nur einfach wirkend ist, vorgesehen, die Schraubenfeder 35 wäre nicht vorhanden. Das heißt, dass dann die bei der Ausgestaltung gemäß der Figuren 4 und 5, auf die die Ausgestaltung nach den Figuren 14 und 15 aufsetzt, realisierte Entkopplung und Kraftbegrenzung bei einer durch das Stellelement 17 induzierten Bewegung von der Schließstellung in die Offenstellung nicht gegeben wäre.

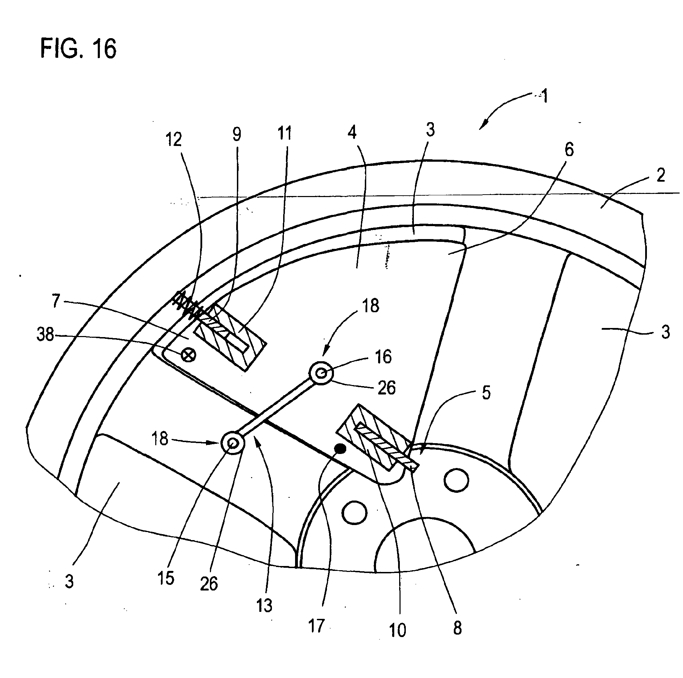

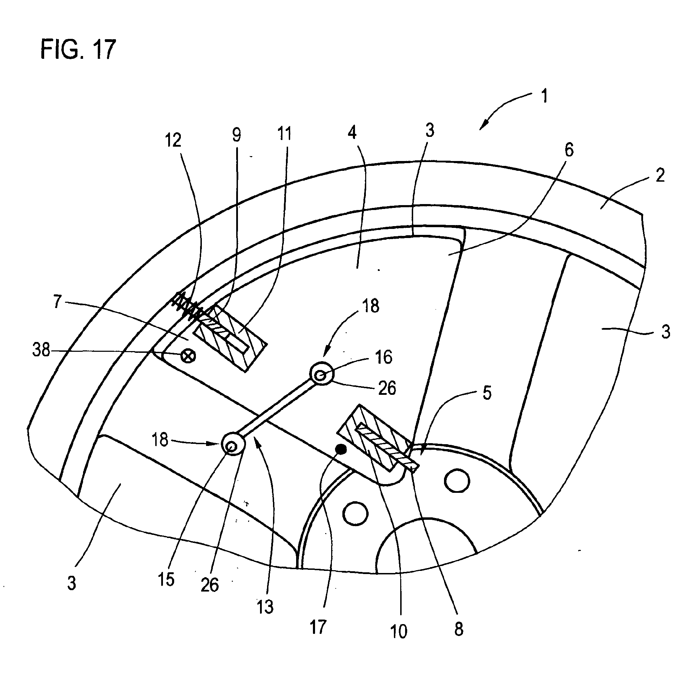

Die Figuren 16 und 17 zeigen schließlich eine weitere erfindungsgemäße Ausführungsform eines Fahrzeugrads 1, die der Ausgestaltung nach den Figuren 8 und 9 entspricht. Dort ist die jeweilige Elastizität 18 im Bereich der Lagerungen 15, 16 vorgesehen, wobei auch nur eine Elastizität 18 vorgesehen sein kann. Die Elastizitäten sind hier mittels Kunststoff- oder Gummiringen 26 realisiert. Diese können in allen Richtungen deformiert werden, eine Vorzugsrichtung der Deformation ist hier nicht gegeben.

Dies führt dazu, dass diese Gummi- oder Kunststoffringe infolge ihrer Integration im Bereich der Lagerungen 15, 16 von Haus aus doppelt wirkende Elastizitäten 18 darstellen. Sie können, siehe die Figuren 8 und 9, einerseits die aufzuwendende Kraft beim Übergang von der Schließstellung in die Offenstellung begrenzen. In diesem Fall werden sie in der in Fig. 9 gezeigten Richtung deformiert.

Sie können aber auch, siehe die Figuren 16 und 17, in die andere Richtung deformiert werden und daraus resultierend die Kraft zum Bewegen von der Offenstellung (Fig. 16) in die Schließstellung (Fig. 17) begrenzen. Es kommt zu der in Fig. 17 gezeigten Deformation. Auch hier ist also lediglich die durch das jeweilige Material definierte Steifigkeit der Gummi- oder Kunststoffringe 26 zum Stellungsübergang zu überdrücken.

**Patentansprüche**

1. Fahrzeugrad umfassend eine Felge (2), einen an dieser befestigten Bremstopf und eine am Bremstopf befestigte Bremsscheibe, wobei an der Felge (2) mehrere schwenkbar gelagerte plattenförmige Abdeckelemente (4) zum temporären Verschließen zugeordneter felgenseitiger Durchbrechungen (3) vorgesehen sind, die über wenigstens ein thermisch gesteuertes Stellelement (17) von einer Schließstellung, die die Abdeckelemente (4) bei Drehung des Rads fliehkraftbedingt einnehmen, in eine Offenstellung bringbar sind, wobei jedes Abdeckelement (4) längs der Schwenkachse (5) gegen die Kraft eines Rückstellelements verschiebbar und mit der Felge (2) über ein bei einer Verschiebebewegung zwangsführendes Koppelelement (13) verbunden ist, **dadurch gekennzeichnet,** **dass** das Koppelelement (13) eine integrierte Elastizität (18) aufweist oder gegen eine solche Elastizität (18) felgenseitig und/oder abdeckelementseitig gelagert ist, derart, dass die zum Bewegen eines Abdeckelements (4) aus der Schließstellung in die Offenstellung benötigte Kraft begrenzt ist.

2. Fahrzeugrad umfassend eine Felge (2), einen an dieser befestigten Bremstopf und eine am Bremstopf befestigte Bremsscheibe, wobei an der Felge (2) mehrere schwenkbar gelagerte plattenförmige Abdeckelemente (4) zum temporären Verschließen zugeordneter felgenseitiger Durchbrechungen (3) vorgesehen sind, die über wenigstens ein thermisch gesteuertes Stellelement (17) von einer Schließstellung, die die Abdeckelemente (4) bei Drehung des Rads fliehkraftbedingt einnehmen, in eine Offenstellung bringbar sind, wobei jedes Abdeckelement (4) längs der Schwenkachse (5) gegen die Kraft eines Rückstellelements verschiebbar und mit der Felge (2) über ein bei einer Verschiebebewegung zwangsführendes Koppelelement (13) verbunden ist, **dadurch gekennzeichnet,** **dass** das Koppelelement (13) eine integrierte Elastizität (18) aufweist oder gegen eine solche Elastizität (18) felgenseitig und/oder abdeckelementseitig gelagert ist, derart, dass die zum Bewegen eines Abdeckelements (4) aus der Offenstellung in die Schließstellung benötigte Kraft begrenzt ist.

3. Fahrzeugrad nach Anspruch 1 und 2, **dadurch gekennzeichnet,** **dass** eine Elastizität (18) vorgesehen ist, die doppelt wirkend ist, derart, dass sie sowohl die zum Bewegung des Abdeckelements (4) aus der Schließstellung in die Offenstellung benötigte Kraft, als auch die zum Bewegen des Abdeckelements (4) aus der Offenstellung in die Schließstellung benötigte Kraft begrenzt.

4. Fahrzeugrad nach einem der vorangehenden Ansprüche, **dadurch gekennzeichnet, dass** dass die Elastizität (18) mittels wenigstens eines Federelements (19, 35, 36) oder wenigstens eines aus einem elastischen Material bestehenden Elements (26) gebildet ist.

5. Fahrzeugrad nach, **dadurch gekennzeichnet,** **dass** das Koppelelement (13) eine Koppelstange (14) ist.

6. Fahrzeugrad nach Anspruch 5, **dadurch gekennzeichnet,** **dass** das die Koppelstange (14) aus zwei Abschnitten (20, 21) besteht, die über die Elastizität (18) zueinander axial verschiebbar miteinander gekoppelt sind.

7. Fahrzeugrad nach Anspruch 6, **dadurch gekennzeichnet,** **dass** die Elastizität (18) eine Schraubenfeder (19, 35, 36) ist.

8. Fahrzeugrad nach einem der Ansprüche 1 bis 4, **dadurch gekennzeichnet,** **dass** das Koppelelement (13) eine abdeckelementseitig vorgesehene Hülse ist, die von einer die Schwenkachse bildenden Stange durchsetzt ist und mit dieser über eine Kulissenführung zusammenwirkt, wobei die Hülse über die Elastizität am Abdeckelement gelagert ist.

9. Fahrzeugrad nach Anspruch 1 bis 4, **dadurch gekennzeichnet,** **dass** das Koppelelement (13) eine auf der Schwenkachse (5) sitzende Hülse (25) ist, die eine mit der Schwenkachse (5) zusammenwirkende Kulissenführung (22) bildet, und die gegen die Elastizität (18) bewegbar ist.

10. Fahrzeugrad nach Anspruch 8 oder 9, **dadurch gekennzeichnet,** **dass** die Elastizität (18) eine Schraubenfeder (19, 35, 36) ist.

11. Fahrzeugrad nach Anspruch 1 bis 4, **dadurch gekennzeichnet, dass** dass das felgenseitige und/oder abdeckelementseitig gegen die Elastizität (18) gelagerte Koppelelement (13) gegen ein die Elastizität (18) bildendes elastisch deformierbares Kunststoff- oder Gummielement (26) gelagert ist.

12. Fahrzeugrad nach Anspruch 11, **dadurch gekennzeichnet,** **dass** das Kunststoff- oder Gummielement (26) ein Ring ist.

**Claims**

1. Vehicle wheel comprising a rim (2), a brake cup attached to said rim and a brake disc attached to the brake cup, a plurality of pivotally mounted plateshaped cover elements (4) for temporarily closing associated rim-side openings (3) being arranged on the rim (2), which openings can be moved out of a closed position, which receives the cover elements (4) owing to centrifugal force during rotation of the wheel, into an open position by means of at least one thermally controlled actuator (17), each cover element (4) being displaceable along the pivot shaft (5) against the force of a restoring element and being connected to the rim (2) via a coupling element (13) which is positively guided during a displacement movement,
**characterised in that**,
the coupling element (13) has an integrated resilient member (18) or is mounted against such a resilient member (18) on the rim side and/or on the cover element side, such that the force required to move a cover element (4) out of the closed position into the open position is restricted.

2. Vehicle wheel comprising a rim (2), a brake cup attached to said rim and a brake disc attached to the brake cup, a plurality of pivotally mounted plateshaped cover elements (4) for temporarily closing associated rim-side openings (3) being arranged on the rim (2), which openings can be moved out of a closed position, which receives the cover elements (4) owing to centrifugal force during rotation of the wheel, into an open position by means of at least one thermally controlled actuator (17), each cover element (4) being displaceable along the pivot shaft (5) against the force of a restoring element and being connected to the rim (2) via a coupling element (13) which is positively guided during a displacement movement,
**characterised in that** the coupling element (13) has an integrated resilient member (18) or is mounted against such a resilient member (18) on the rim side and/or on the cover element side, such that the force required to move a cover element (4) out of the open position into the closed position is restricted.

3. Vehicle wheel according to claim 1 and claim 2,
**characterised in that**,
a resilient member (18) is provided which has a double action, such that it restricts both the force required to move the cover element (4) out of the closed position into the open position and the force required to move the cover element (4) out of the open position into the closed position.

4. Vehicle wheel according to any of the preceding claims,
**characterised in that**
the resilient member (18) is formed by means of at least one spring element (19, 35, 36) or at least one element (26) consisting of a resilient material.

5. Vehicle wheel according to,
**characterised in that**
the coupling element (13) is a coupling rod (14).

6. Vehicle wheel according to claim 5,

**characterised in that**
the coupling rod (14) consists of two portions (20, 21) which are coupled to each other so as to be axially displaceable with respect to each other by means of the resilient member (18).

7. Vehicle wheel according to claim 6,
**characterised in that**
the resilient member (18) is a helical spring (19, 35, 36).

8. Vehicle wheel according to any of claims 1 to 4,
**characterised in that**
the coupling element (13) is a sleeve which is provided on the cover element side, is penetrated by a rod which forms the pivot shaft, and interacts therewith via a sliding block guide, the sleeve being mounted on the cover element by means of the resilient member.

9. Vehicle wheel according to claims 1 to 4,
**characterised in that**
the coupling element (13) is a sleeve (25) which rests on the pivot shaft (5), forms a sliding block guide (22) which interacts with the pivot shaft (5), and is movable against the resilient member (18).

10. Vehicle wheel according to either claim 8 or claim 9,
**characterised in that**
the resilient member (18) is a helical spring (19, 35, 36).

11. Vehicle wheel according to claims 1 to 4,
**characterised in that**
the rim-side and/or the cover-element-side coupling element (13) mounted against the resilient member (18) is mounted against an elastically deformable plastics or rubber element (26) that forms the resilient member (18).

12. Vehicle wheel according to claim 11,
**characterised in that**
the plastics or rubber element (26) is a ring.

**Revendications**

1. Roue de véhicule comprenant une jante (2), un pot de frein fixé à celle-ci et un disque de frein fixé sur le pot de frein, dans laquelle on monte sur la jante (2) plusieurs éléments de recouvrement (4) en forme de plaque montés à pivotement pour obturer temporairement les évidements côté jante correspondants (3), lesquels évidements peuvent être amenés, via un élément de commande (17) commandé par voie thermique, d'une position de fermeture, dans laquelle ils reçoivent les éléments de recouvrement (4) lors de la rotation de la roue sous l'influence de la force centrifuge, à une position d'ouverture, où chaque élément de recouvrement (4) peut coulisser le long de l'axe pivot (5) à l'encontre de la force d'un élément de rappel et est relié à la jante (2) via un élément de couplage (13) guidé à force dans un mouvement coulissant,
**caractérisée en ce que** :

l'élément de couplage (13) présente une élasticité intégrée (18) ou est monté à l'encontre d'une telle élasticité (18) côté jante et/ou côté élément de recouvrement de sorte que la force nécessaire au déplacement d'un élément de recouvrement (4) de la position de fermeture à la position d'ouverture soit limitée.

2. Roue de véhicule comprenant une jante (2), un pot de frein fixé à celle-ci et un disque de frein fixé sur le pot de frein, dans laquelle on monte sur la jante (2) plusieurs éléments de recouvrement (4) en forme de plaque montés à pivotement pour obturer temporairement les évidements côté jante correspondants (3), lesquels évidements peuvent être amenés, via un élément de commande (17) commandé par voie thermique, d'une position de fermeture, dans laquelle ils reçoivent les éléments de recouvrement (4) lors de la rotation de la roue sous l'influence de la force centrifuge, à une position d'ouverture, où chaque élément de recouvrement (4) peut coulisser le long de l'axe pivot (5) à l'encontre de la force d'un élément de rappel et est relié à la jante (2) via un élément de couplage (13) guidé à force dans un mouvement coulissant,
**caractérisée en ce que** :

l'élément de couplage (13) présente une élasticité intégrée (18) ou est monté à l'encontre d'une telle élasticité (18) côté jante et/ou côté élément de recouvrement de sorte que la force nécessaire au déplacement d'un élément de recouvrement (4) de la position d'ouverture à la position de fermeture soit limitée.

3. Roue de véhicule selon les revendications 1 et 2, **caractérisée en ce que** :

il est prévu une élasticité (18) qui est doublement active de sorte qu'elle limite autant la force nécessaire au déplacement de l'élément de recouvrement (4) de la position de fermeture à la position d'ouverture que la force nécessaire au déplacement de l'élément de recouvrement (4) de la position d'ouverture à la position de fermeture.

4. Roue de véhicule selon l'une quelconque des revendications précédentes, **caractérisée en ce que** :

l'élasticité (18) est conférée au moyen d'au moins un élément de ressort (19, 35, 36) ou d'au moins un élément (26) constitué d'un matériau élastique.

5. Roue de véhicule selon **caractérisée en ce que** :

l'élément de couplage (13) est une tige de couplage (14).

6. Roue de véhicule selon la revendication 5, **caractérisée en ce que** :

la tige de couplage (14) est constituée de deux sections (20, 21), qui sont couplées l'une à l'autre de manière à pouvoir coulisser l'une par rapport à l'autre sous l'effet de l'élasticité (18).

7. Roue de véhicule selon la revendication 6, **caractérisée en ce que** :

l'élasticité (18) est conférée par un ressort à boudin (19, 35, 36).

8. Roue de véhicule selon l'une quelconque des revendications 1 à 4, **caractérisée en ce que** :

l'élément de couplage (13) est une douille aménagée côté élément de recouvrement, qui est traversée par une tige formant l'axe pivot et coopère avec celle-ci via un guide de coulisse, dans laquelle la douille est montée sur l'élément de recouvrement via l'élasticité.

9. Roue de véhicule selon les revendications 1 à 4, **caractérisée en ce que** :

l'élément de couplage (13) est une douille (25) s'appuyant sur l'axe pivot (5), qui forme un guide de coulisse (22) coopérant avec l'axe pivot (5) et qui est mobile à l'encontre de l'élasticité (18).

10. Roue de véhicule selon la revendication 8 ou la revendication 9, **caractérisée en ce que** :

l'élasticité (18) est conférée par un ressort à boudin (19, 35, 36).

11. Roue de véhicule selon les revendications 1 à 4, **caractérisée en ce que** :

l'élément de couplage (13) monté côté jante et/ou côté élément de recouvrement à l'encontre de l'élasticité (18) est monté contre un élément de matière plastique ou de caoutchouc (26) déformable de manière élastique formant l'élasticité (18).

12. Roue de véhicule selon la revendication 11, **caractérisée en ce que** :

l'élément de matière plastique ou de caoutchouc (26) est un anneau.

FIG. 1

FIG. 2

FIG. 3

FIG. 4

## FIG. 5

FIG. 6

EP 2 605 920 B1

FIG.7

4

11

19

17

22

## FIG. 8

FIG. 9

FIG. 10

2

4

30

27

33

32

34

FIG. 11

27

30

29

31

28

T

FIG. 12

FIG. 13

FIG. 14

FIG. 15

FIG. 16

FIG. 17

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0145487 A2
- EP 1319526 A2

- FR 2699453 A1